# EUROPEAN PATENT APPLICATION

(11) **EP 4 528 357 A1**
(43) Date of publication of application: **26.03.2025**
(21) Application number: 23834523.5
(22) Date of filing: 19.05.2023
(51) Int. Cl.: G02B 27/01, G02B 27/28, B60K 35/00

(54) **OPTICAL SYSTEM, DISPLAY DEVICE, AND VEHICLE**

(30) Priority: 07.07.2022 CN 202210796123
(71) Applicant: Shenzhen Yinwang Intelligent Technologies Co., Ltd., Shenzhen, Guangdong 518129 (CN)
(72) Inventor: SHU, Xiangping, Shenzhen, Guangdong 518129 (CN); PAN, Zhong, Shenzhen, Guangdong 518129 (CN); MAO, Xunchao, Shenzhen, Guangdong 518129 (CN)
(74) Representative: Pfenning, Meinig & Partner mbB
(86) International application number: PCT/CN2023/095272
(87) International publication number: WO 2024/007749

(57) **Abstract**

This application provides an optical system, a display device, and a means of transportation, and relates to the field of optical display technologies. The optical system may be a PGU or a vehicle headlight, and the optical system can reduce damage caused by external light to the optical system. The optical system includes: an optical modulator, a lens, an optical splitting component disposed between the optical modulator and the lens, and a conductive component disposed between the optical splitting component and the lens. The optical modulator is configured to generate imaging light, where a polarization direction of the imaging light is a first polarization direction. The optical splitting component is configured to transmit the imaging light to the conductive component. The conductive component is configured to adjust the polarization direction of the imaging light to a second polarization direction. The lens is configured to output the imaging light. The lens is further configured to: receive reverse light, and transmit the reverse light to the conductive component, where a polarization direction of the reverse light is the second polarization direction. The conductive component is further configured to transmit the reverse light to the optical splitting component. The optical splitting component is further configured to reflect the reverse light.

## Description

This application claims priority to Chinese Patent Application No. 202210796123.5, filed with the China National Intellectual Property Administration on July 7, 2022 and entitled "OPTICAL SYSTEM, DISPLAY DEVICE, AND MEANS OF TRANSPORTATION", which is incorporated herein by reference in its entirety.

### TECHNICAL FIELD

This application relates to the field of optical display technologies, and in particular, to an optical system, a display device, and a means of transportation.

### BACKGROUND

A head-up display (head-up display, HUD) is a device that projects image information to the front of a helmet of a driver or to a windshield. Due to the HUD, the driver does not need to look down at another instrument in a driving process, so that driving safety is improved. Currently, the HUD is widely applied to means of transportation like a smart vehicle. Generally, the HUD is used to project driving-related image information, for example, navigation information and meter information, so that the driver sees the driving-related image information projected by the HUD while observing a road surface.

The HUD includes a picture generation unit (picture generation unit, PGU) and a reflection component. The PGU is configured to generate imaging light including the driving-related image information, and the PGU reflects the imaging light to the front of the helmet of the driver or to the windshield through the reflection component. Based on reversibility of an optical path, external light is also reflected to the PGU through the reflection component. When the external light is strong, the external light reflected to the PGU causes damage to the PGU, so that a service life of the HUD is shortened.

### SUMMARY

This application provides an optical system, a display device, and a means of transportation. The optical system may be a PGU or a vehicle headlight. The optical system can reduce damage caused by external light to the optical system.

According to a first aspect, an optical system is provided, including an optical modulator, a lens, an optical splitting component disposed between the optical modulator and the lens, and a conductive component disposed between the optical splitting component and the lens. The optical modulator is configured to: generate imaging light, and transmit the imaging light to the optical splitting component, where a polarization direction of the imaging light is a first polarization direction. The optical splitting component is configured to transmit the imaging light to the conductive component. The conductive component is configured to: adjust the polarization direction of the imaging light to a second polarization direction, and transmit the imaging light to the lens, where the first polarization direction is different from the second polarization direction. The lens is configured to output the imaging light. The lens is further configured to: receive reverse light, and transmit the reverse light to the conductive component, where a polarization direction of the reverse light is the second polarization direction. The conductive component is further configured to transmit the reverse light to the optical splitting component. The optical splitting component is further configured to reflect the reverse light. In the optical system, the optical modulator generates the imaging light, where the polarization direction of the imaging light is the first polarization direction (P polarization); and transmits the imaging light to the optical splitting component. The optical splitting component transmits the imaging light to the conductive component. The conductive component is configured to: adjust the polarization direction of the imaging light to the second polarization direction (S polarization), and transmit the imaging light whose polarization direction is the second polarization direction to the lens. The lens outputs the imaging light. It can be learned that in the optical system, output of the imaging light is not affected. When the optical system receives the reverse light, the lens first receives the reverse light, where the polarization direction of the reverse light is the second polarization direction. The lens transmits the reverse light to the conductive component. The conductive component transmits the reverse light to the optical splitting component, and the conductive component does not adjust the polarization direction of the reverse light. Therefore, the polarization direction of the reverse light transmitted to the optical splitting component is the second polarization direction. The optical splitting component reflects the reverse light. In other words, the optical splitting component transmits, to the conductive component, the received imaging light output by the optical modulator, and the optical splitting component reflects the received reverse light output by the conductive component. Based on a difference between reflection and transmission, it can be learned that the reverse light is not transmitted to the optical modulator. Therefore, the reverse light does not affect the optical modulator.

Optionally, the conductive component includes a magneto-optical crystal disposed close to the optical splitting component and a 1/2 wave plate disposed close to the lens. The magneto-optical crystal is configured to rotate the polarization direction of the imaging light clockwise by 45 degrees. The 1/2 wave plate is configured to rotate the polarization direction of the imaging light clockwise by 45 degrees. The 1/2 wave plate is further configured to rotate the polarization direction of the reverse light counterclockwise by 45 degrees. The magneto-optical crystal is further configured to rotate the polarization direction of the reverse light clockwise by 45 degrees. In this optional solution, under an action of a predetermined magnetic field, the magneto-optical crystal may rotate, clockwise by a predetermined degree, a polarization direction of linearly polarized light that is transmitted through the magneto-optical crystal in a forward direction, or may rotate, clockwise by a predetermined degree, a polarization direction of linearly polarized light that is transmitted through the magneto-optical crystal in a reverse direction. When an included angle between a polarization direction of linearly polarized light incident to the 1/2 wave plate and a principal section of a crystal of the 1/2 wave plate is θ degrees, that a difference between the polarization direction of the linearly polarized light incident to the 1/2 wave plate and a polarization direction of linearly polarized light transmitted from the 1/2 wave plate is 2θ degrees means that the polarization direction of the linearly polarized light output from the 1/2 wave plate is rotated clockwise by 2θ degrees relative to the polarization direction of the linearly polarized light incident to the 1/2 wave plate, and that a difference between a polarization direction of linearly polarized light reversely incident to the 1/2 wave plate and a polarization direction of linearly polarized light output from the 1/2 wave plate is 2θ degrees means that the polarization direction of the linearly polarized light output from the 1/2 wave plate is rotated counterclockwise by 2θ degrees relative to the polarization direction of the linearly polarized light reversely incident to the 1/2 wave plate. Therefore, the magneto-optical crystal and the 1/2 wave plate are used. The magneto-optical crystal rotates the polarization direction of the imaging light clockwise by 45 degrees, and the 1/2 wave plate rotates the polarization direction of the imaging light clockwise by 45 degrees, so that after the imaging light whose polarization direction is the first polarization direction is transmitted through the conductive component, the polarization direction of the imaging light changes to the second polarization direction. In addition, the 1/2 wave plate rotates the polarization direction of the reverse light counterclockwise by 45 degrees, and the magneto-optical crystal rotates the polarization direction of the reverse light clockwise by 45 degrees, so that after the reverse light whose polarization direction is the second polarization direction is transmitted through the conductive component, the polarization direction of the reverse light is still the second polarization direction.

Optionally, the optical system further includes an optical absorption component. The optical absorption component is configured to absorb the reverse light reflected by the optical splitting component. In this optional manner, the reverse light is reflected to the optical absorption component through the optical splitting component, so that the optical absorption component absorbs the reverse light, to reduce impact of the reverse light on another component in the optical system, and avoid conversion of the reverse light into heat energy.

Optionally, the optical system further includes a light source. The light source is disposed on a side that is of the optical splitting component and that is opposite to the optical absorption component. The light source is configured to generate a light beam, where a polarization direction of the light beam is the second polarization direction. The optical splitting component is configured to reflect, to the optical modulator, the light beam output by the light source. The optical modulator is specifically configured to modulate, based on image information, the light beam output by the light source, to generate the imaging light including the image information.

Optionally, the optical splitting component includes a first polarization optical splitting prism. The first polarization optical splitting prism includes a first incident surface, a second incident surface, a first emergent surface, and a second emergent surface. The first incident surface is opposite to the first emergent surface, and the second incident surface is opposite to the second emergent surface. The optical modulator is disposed on a side of the first incident surface of the first polarization optical splitting prism. The conductive component is disposed on a side of the first emergent surface of the first polarization optical splitting prism. The light source is disposed on a side of the second incident surface of the first polarization optical splitting prism. The optical absorption component is disposed on a side of the second emergent surface of the first polarization optical splitting prism.

Optionally, the optical splitting component includes a second polarization optical splitting prism and a third polarization optical splitting prism. The second polarization optical splitting prism includes a third incident surface, a fourth incident surface, and a third emergent surface. The third incident surface is opposite to the third emergent surface. The third polarization optical splitting prism includes a fifth incident surface, a fourth emergent surface, and a fifth emergent surface. The fifth incident surface is opposite to the fifth emergent surface. The fifth incident surface of the third polarization optical splitting prism is disposed on a side of the third emergent surface of the second polarization optical splitting prism. The optical modulator is disposed on a side of the third incident surface of the second polarization optical splitting prism. The light source is disposed on a side of the fourth incident surface of the second polarization optical splitting prism. The conductive component is disposed on a side of the fifth emergent surface of the third polarization optical splitting prism. The optical absorption component is disposed on a side of the fourth emergent surface of the third polarization optical splitting prism.

Optionally, the optical system further includes a controller. The controller is connected to the light source and the optical absorption component. The controller is configured to adjust, based on light intensity of the reverse light absorbed by the optical absorption component, light intensity of the light beam generated by the light source. In this optional manner, the optical system may adjust, based on the light intensity of the reverse light, the light intensity of the light beam generated by the light source, so that a display effect of the optical system is better.

Optionally, the optical system further includes a polarizer. The polarizer is disposed on a side that is of the conductive component and that is away from the optical splitting component. The polarizer is configured to transmit the imaging light whose polarization direction is the second polarization direction. The polarizer is further configured to transmit the reverse light whose polarization direction is the second polarization direction. In this optional manner, the polarizer is configured to transmit the reverse light whose polarization direction is the second polarization direction, so that a polarization direction of the reverse light received by the conductive component is determined as the second polarization direction.

Optionally, the optical absorption component includes any one of the following: a black velvet cloth, a metal sheet plated with black paint, and a photodiode.

Optionally, the first polarization direction is the P polarization, and the second polarization direction is the S polarization.

Optionally, the optical modulator includes any one of the following: a thin film transistor liquid crystal display, digital light processing, and a liquid crystal on silicon.

According to a second aspect, an optical system is provided, including an optical modulator, a lens, an optical splitting component disposed between the optical modulator and the lens, and a conductive component disposed between the optical splitting component and the lens. The optical modulator is configured to: generate imaging light, and transmit the imaging light to the optical splitting component, where a polarization direction of the imaging light is a second polarization direction. The optical splitting component is configured to reflect the imaging light to the conductive component. The conductive component is configured to transmit the imaging light to the lens. The lens is configured to output the imaging light. The lens is further configured to: receive reverse light, and transmit the reverse light to the conductive component, where a polarization direction of the reverse light is the second polarization direction. The conductive component is further configured to: adjust the polarization direction of the reverse light to a first polarization direction, and transmit the reverse light to the optical splitting component, where the first polarization direction is different from the second polarization direction. The optical splitting component is further configured to transmit the reverse light. In the optical system, the optical modulator generates the imaging light, where the polarization direction of the imaging light is the second polarization direction (S polarization), and transmits the imaging light to an optical splitting component. The optical splitting component reflects the imaging light to the conductive component. The conductive component transmits the imaging light to the lens. The lens outputs the imaging light. It can be learned that in the optical system, output of the imaging light is not affected. When the optical system receives the reverse light, the lens first receives the reverse light. The polarization direction of the reverse light is the second polarization direction. The lens transmits the reverse light to the conductive component. The conductive component is configured to adjust the polarization direction of the reverse light to the first polarization direction (P polarization). Therefore, the polarization direction of the reverse light transmitted to the optical splitting component is the first polarization direction. The optical splitting component transmits the reverse light. It indicates that the optical splitting component reflects, to the conductive component, the received imaging light output by the optical modulator, and the optical splitting component transmits the received reverse light output by the conductive component. Based on a difference between reflection and transmission, it can be learned that the reverse light is not transmitted to the optical modulator, and the reverse light does not affect the optical modulator.

Optionally, the conductive component includes a 1/2 wave plate disposed close to the optical splitting component and a magneto-optical crystal disposed close to the lens. The 1/2 wave plate is configured to rotate the polarization direction of the imaging light counterclockwise by 45 degrees. The magneto-optical crystal is configured to rotate the polarization direction of the imaging light clockwise by 45 degrees. The magneto-optical crystal is further configured to rotate the polarization direction of the reverse light clockwise by 45 degrees. The 1/2 wave plate is further configured to rotate the polarization direction of the reverse light clockwise by 45 degrees.

Optionally, the optical system further includes an optical absorption component. The optical absorption component is configured to absorb the reverse light transmitted through the optical splitting component.

Optionally, the optical system further includes a light source. The light source is disposed on a side that is of the optical splitting component and that is opposite to the optical modulator. The light source is configured to generate a light beam, where a polarization direction of the light beam is the first polarization direction. The optical splitting component is configured to transmit, to the optical modulator, the light beam output by the light source. The optical modulator is specifically configured to modulate, based on image information, the light beam output by the light source, to generate the imaging light including the image information.

Optionally, the optical splitting component includes a first polarization optical splitting prism. The first polarization optical splitting prism includes a first incident surface, a second incident surface, a first emergent surface, and a second emergent surface. The first incident surface is opposite to the first emergent surface, and the second incident surface is opposite to the second emergent surface. The conductive component is disposed on a side of the first incident surface of the first polarization optical splitting prism. The light source is disposed on a side of the second incident surface of the first polarization optical splitting prism. The optical absorption component is disposed on a side of the first emergent surface of the first polarization optical splitting prism. The optical modulator is disposed on a side of the second emergent surface of the first polarization optical splitting prism.

Optionally, the optical splitting component includes a second polarization optical splitting prism and a third polarization optical splitting prism. The second polarization optical splitting prism includes a third incident surface, a third emergent surface, and a fourth emergent surface. The third incident surface is opposite to the third emergent surface. The third polarization optical splitting prism includes a fourth incident surface, a fifth incident surface, and a fifth emergent surface. The fifth incident surface is opposite to the fifth emergent surface. The fourth incident surface of the third polarization optical splitting prism is disposed on a side of the fourth emergent surface of the second polarization optical splitting prism. The light source is disposed on a side of the third incident surface of the second polarization optical splitting prism. The optical modulator is disposed on a side of the third emergent surface of the second polarization optical splitting prism. The conductive component is disposed on a side of the fifth incident surface of the third polarization optical splitting prism. The optical absorption component is disposed on a side of the fifth emergent surface of the third polarization optical splitting prism.

Optionally, a controller is further included. The controller is connected to the light source and the optical absorption component. The controller is configured to adjust, based on light intensity of the reverse light absorbed by the optical absorption component, light intensity of the light beam generated by the light source.

Optionally, a polarizer is further included. The polarizer is disposed on a side that is of the conductive component and that is away from the optical splitting component. The polarizer is configured to transmit the imaging light whose polarization direction is the second polarization direction. The polarizer is further configured to transmit the reverse light whose polarization direction is the second polarization direction.

Optionally, the optical absorption component includes any one of the following: a black velvet cloth, a metal sheet plated with black paint, and a photodiode.

Optionally, the first polarization direction is the P polarization, and the second polarization direction is the S polarization.

Optionally, the optical modulator includes any one of the following: a thin film transistor liquid crystal display, digital light processing, and a liquid crystal on silicon.

For technical effects implemented in the optional manners of the second aspect, refer to technical effects implemented in the optional manners of the first aspect. Details are not described herein again.

According to a third aspect, a display device is provided, including a processor and the optical system according to any one of the implementations of the first aspect and any one of the implementations of the second aspect. The processor is configured to send image information to an optical modulator in the optical system.

Optionally, a reflection component is further included. The reflection component is configured to: reflect imaging light output by the optical system, and reflect reverse light to the optical system.

Optionally, a dust-proof cover and a bracket supporting the dust-proof cover are further included. The bracket and the dust-proof cover form an accommodation cavity. The optical system and the reflection component are disposed in the accommodation cavity. The dust-proof cover is configured to transmit the imaging light reflected by the reflection component. The dust-proof cover is further configured to: receive the reverse light, and transmit the reverse light whose polarization direction is the second polarization direction to the reflection component.

According to a fourth aspect, a means of transportation is provided, including the display device according to any one of the implementations of the third aspect. The display device is mounted on the means of transportation.

Optionally, a windshield is further included. The windshield is configured to: receive imaging light reflected by the display device, and reflect the imaging light to eyes of a driver of the means of transportation. The windshield is further configured to transmit external light, to generate the reverse light.

For technical effects brought by any one of the possible implementations of the third aspect and the fourth aspect, refer to the technical effects brought by the implementations of the first aspect and the second aspect. Details are not described herein again.

### BRIEF DESCRIPTION OF DRAWINGS

FIG. 1 is a diagram of a principle of a head-up display according to an embodiment of this application;
FIG. 2 is a diagram of a structure of a picture generation unit in a head-up display according to an embodiment of this application;
FIG. 3 is a diagram of a principle of desktop display according to an embodiment of this application;
FIG. 4 is a diagram of a structure of a vehicle headlight according to an embodiment of this application;
FIG. 5 is a diagram of a structure of an optical system according to an embodiment of this application;
FIG. 6 is a diagram of a structure of a conductive component in an optical system according to an embodiment of this application;
FIG. 7 is a diagram of a structure of an optical system according to another embodiment of this application;
FIG. 8 is a diagram of a structure of an optical system according to still another embodiment of this application;
FIG. 9 is a diagram 1 of a structure of an optical splitting component in an optical system according to still another embodiment of this application;
FIG. 10 is a diagram 2 of a structure of an optical splitting component in an optical system according to still another embodiment of this application;
FIG. 11 is a diagram of a structure of an optical system according to yet another embodiment of this application;
FIG. 12 is a diagram of a structure of an optical system according to another embodiment of this application;
FIG. 13 is a diagram of a structure of a conductive component in an optical system according to another embodiment of this application;
FIG. 14 is a diagram of a structure of an optical system according to still another embodiment of this application;
FIG. 15 is a diagram of a structure of an optical system according to yet another embodiment of this application;
FIG. 16 is a diagram 1 of a structure of an optical splitting component in an optical system according to yet another embodiment of this application;
FIG. 17 is a diagram 2 of a structure of an optical splitting component in an optical system according to yet another embodiment of this application;
FIG. 18 is a diagram of a structure of an optical system according to another embodiment of this application;
FIG. 19 is a diagram of a structure of an optical system according to still another embodiment of this application;
FIG. 20 is a diagram of a structure of an optical system according to yet another embodiment of this application;
FIG. 21 is a diagram of a structure of an optical system according to another embodiment of this application;
FIG. 22 is a diagram of a structure of an optical system according to still another embodiment of this application;
FIG. 23 is a diagram of a structure of an optical system according to yet another embodiment of this application;
FIG. 24 is a diagram of a structure of an optical system according to another embodiment of this application;
FIG. 25 is a diagram of a structure of a display device according to an embodiment of this application;
FIG. 26 is a diagram of a circuit of a display device according to an embodiment of this application;
FIG. 27 is a diagram of a structure of a means of transportation according to an embodiment of this application; and
FIG. 28 is a functional diagram of a means of transportation according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The following describes technical terms used in embodiments of this application.

Polarization state: A polarization state of light includes natural light, partially polarized light, linearly polarized light, circularly polarized light, and elliptically polarized light. The natural light is alternatively referred to as "sunlight", and does not directly show a polarization phenomenon. The natural light includes all possible vibration directions perpendicular to a propagation direction of a light wave, and therefore does not show polarization. A trajectory of end points of a light vector of the linearly polarized light is a straight line. In other words, the light vector only vibrates along a determined direction. A size of the light vector changes with a phase, and a direction of the light vector remains unchanged. The most common linearly polarized light is light whose polarization direction is P polarization and light whose polarization direction is S polarization. A trajectory of end points of a light vector of the elliptically polarized light is an ellipse. In other words, the light vector rotates continuously. A size and a direction of the light vector change regularly with time. A trajectory of end points of a light vector of the circularly polarized light is a circle. In other words, the light vector rotates continuously. A size of the light vector remains unchanged, but a direction of the light vector changes regularly with time. The partially polarized light includes light vectors in various directions of vibration in a plane perpendicular to a direction of light propagation, but light vibrations are more pronounced in one direction. It is not difficult to learn that the partially polarized light is a superposition of natural light and fully polarized light.

Unless otherwise defined, all technical terms used herein have the same meaning as those commonly known to a person of ordinary skill in the art. In this application, "at least one" refers to one or more, "a plurality of" refers to two or more, and "and/or" describes an association relationship between associated objects, and indicates that three relationships may exist. The term "and/or" describes an association relationship between associated objects and may indicate three relationships. For example, A and/or B may indicate the following cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

In addition, in this application, position terms such as "upper", and "lower" are defined relative to an illustrative position of a component in the accompanying drawings. It should be understood that these direction terms are relative concepts and are used for relative description and clarification, and may vary accordingly depending on a position change in which components are placed in the accompanying drawings.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

A head-up display (head-up display, HUD) is a device that projects image information to the front of a helmet of a driver or to a windshield. Due to the HUD, the driver does not need to look down at another instrument in a driving process, so that driving safety is improved. Currently, the HUD is widely applied to means of transportation like a smart vehicle. Generally, the HUD is used to project driving-related image information, for example, navigation information and meter information, so that the driver sees the driving-related image information projected by the HUD while observing a road surface.

Currently, there are mainly three types of HUDs in smart vehicles: a combiner head-up display (combiner-HUD, C-HUD) system, a windshield head-up display (windshield-HUD, W-HUD) system, and an augmented reality head-up display (augmented reality HUD, AR-HUD) system. The C-HUD is an after-market HUD. For the C-HUD, a translucent resin glass is mounted above an instrument of a smart vehicle, and driving-related image information is projected to the resin glass, to perform imaging on the resin glass. For both the W-HUD and the AR-HUD, driving-related image information is projected to a windshield of a smart vehicle. An imaging distance and an imaging size of the AR-HUD are usually better than an imaging distance and an imaging size of the W-HUD, and the imaging distance and the imaging size of the W-HUD are better than an imaging distance and an imaging size of the C-HUD. Compared with the W-HUD or the C-HUD, the AR-HUD needs to parse and model a road condition ahead by using a sensor (for example, a camera or a radar) of the smart vehicle, to obtain elements such as a location, a distance, and a size of an object. Then, information displayed on the HUD is accurately projected to a corresponding location.

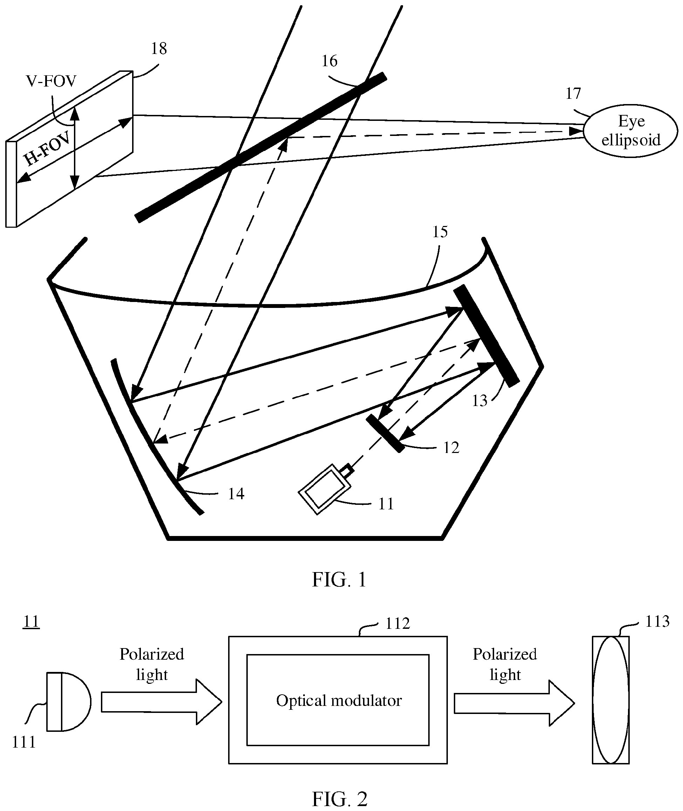

FIG. 1 is a diagram of a principle of a HUD according to an embodiment of this application. The HUD includes a picture generation unit (picture generation unit, PGU) 11 and a reflection component. The reflection component includes a diffusion screen 12, a reflector 13, and a free-form curved mirror 14. To better mount the HUD in a smart vehicle, a dust-proof cover 15 and a bracket supporting the dust-proof cover 15 are usually disposed to form an accommodation cavity, and the PGU 11, the diffusion screen 12, the reflector 13, and the free-form curved mirror 14 are disposed in the accommodation cavity.

When the HUD is used to project driving-related image information, for example, navigation information and meter information, refer to dashed lines with arrows shown in FIG. 1. The PGU 11 is configured to generate imaging light, where the imaging light carries the driving-related image information. In addition, the PGU transmits the generated imaging light to the diffusion screen 12, and the diffusion screen 12 is configured to perform imaging based on the imaging light, to display the driving-related image information. Subsequently, the imaging light continues to propagate. The imaging light is reflected for a first time by the reflector 13, reflected for a second time by the free-form curved mirror 14, transmitted through the dust-proof cover 15, reflected for a third time by the windshield 16, and further transmitted to eyes 17 of a driver of the smart vehicle. The eyes 17 receive a virtual image 18 of the driving-related image information. A vertical field of view (vertical field of view, V-FOV) and a horizontal field of view (horizontal field of view, H-FOV) of the virtual image 18 are related to a type of the HUD. Different types of HUDs generate different V-FOVs and different H-FOVs.

It should be noted that, to reflect the imaging light to the eyes of the driver of the smart vehicle, a location relationship between the PGU 11, the diffusion screen 12, the reflector 13, and the free-form curved mirror 14 needs to meet a requirement of imaging light transmission. In addition, the free-form curved mirror is usually fitted with the windshield of the smart vehicle to eliminate image distortion of the virtual image 18.

Refer to solid lines with arrows shown in FIG. 1. In a driving process of the smart vehicle, external light such as sunlight is also received by the windshield 16. For example, the windshield 16 is configured to transmit the external light such as the sunlight, to generate reverse light. The reverse light is transmitted to the free-form curved mirror 14 through the dust-proof cover 15. The free-form curved mirror 14 reflects the reverse light for a first time, and the reflector 13 reflects the reverse light for a second time, so that the reverse light is transmitted to the diffusion screen 12. The diffusion screen 12 transmits the reverse light to the PGU 11. When light intensity of the reverse light is strong, the reverse light affects the PGU 11.

For example, FIG. 2 is a diagram of a structure of the PGU 11 according to an embodiment of this application. The PGU 11 includes a light source 111, an optical modulator 112, and a lens 113. The light source 111 is configured to generate a linearly polarized light beam and transmit the light beam to the optical modulator 112. The light beam is specifically linearly polarized light, and a polarization direction of the linearly polarized light beam may be P polarization or S polarization. A polarization direction of the P polarization is orthogonal to a polarization direction of the S polarization, and the two polarization directions are at an angle of 90 degrees. The optical modulator 112 is configured to modulate, based on the driving-related image information, the light beam output by the light source 111, to generate the imaging light including the driving-related image information. A polarization direction of the imaging light is different from the polarization direction of the light beam output by the light source 111. When the polarization direction of the light beam output by the light source 111 is the S polarization, the polarization direction of the imaging light generated by the optical modulator 112 is the P polarization. When the polarization direction of the light beam output by the light source 111 is the P polarization, the polarization direction of the imaging light generated by the optical modulator 112 is the S polarization. The lens 113 is configured to output the imaging light to a reflection component, so that the imaging light is finally reflected to the eyes of the driver of the smart vehicle, and the driver of the smart vehicle sees the virtual image of the driving-related image information.

Currently, commonly used optical modulators include a thin film transistor liquid crystal display (thin film transistor liquid crystal display, TFT-LCD), digital light processing (digital light processing, DLP), a liquid crystal on silicon (liquid crystal on silicon, LCOS), and the like. The TFT-LCD is a liquid crystal display technology of a liquid crystal display (liquid crystal display, LCD). The TFT-LCD includes two glass substrates and one liquid crystal layer between the two glass substrates. A color filter covers an upper glass substrate in the two glass substrates, and a transistor is embedded in a lower glass substrate in the two glass substrate. When a current passes through the transistor, an electric field changes, liquid crystal molecules at the liquid crystal layer deflect, so that a polarization direction of light changes. Then, a polarizer is used to determine a brightness state of a pixel. In addition, the upper glass in the two glass substrates is attached to the color filter, and the color filter forms red, blue, and green primary colors included in each pixel. The DLP is a technology that uses a digital micromirror apparatus as a main optical control element to adjust reflected light and implement projection imaging on a diffuser. The LCOS is a reflective micro-liquid crystal projection technology. The LCOS uses a complementary metal oxide semiconductor (complementary metal oxide semiconductor, CMOS) integrated circuit chip coated with liquid crystal silicon as a substrate of a reflective LCD. After the substrate is polished by using an advanced process, the substrate is plated with aluminum and used as a reflector to form a CMOS substrate. Then, the CMOS substrate is attached to a glass substrate including a transparent electrode, and is injected into the liquid crystal layer for packaging. A polarization direction of light is changed by using deflection of liquid crystal molecules at the liquid crystal layer.

When the optical modulator is a TFT-LCD, reverse light reflected to the PGU is transmitted to the TFT-LCD, and a utilization rate of the reverse light by the TFT-LCD is about 7%. When the optical modulator is DLP, the reverse light reflected to the PGU is transmitted to the DLP, and a utilization rate of the reverse light by the DLP is about 25%. When the optical modulator is an LCOS, reverse light reflected to the PGU is transmitted to the LCOS, and a utilization rate of the reverse light by the LCOS is about 25%. Other unused reverse light is converted into heat energy. The heat energy increases a temperature of the optical modulator, and further affects a service life of the optical modulator and the PGU. Especially, when the optical modulator 112 is an LCOS, reverse light with strong light intensity damages a liquid crystal layer of the LCOS.

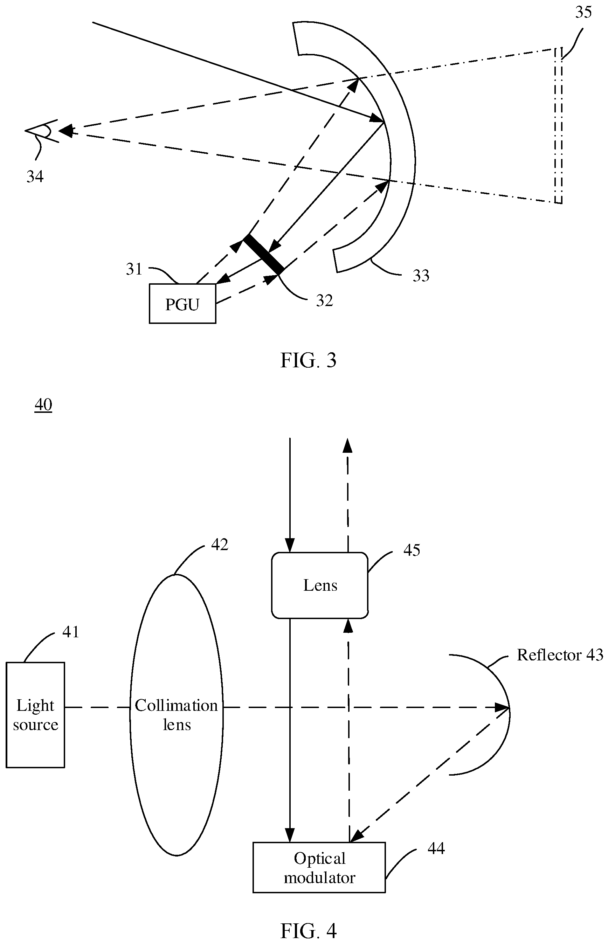

FIG. 3 is a diagram of a principle of desktop display according to an embodiment of this application. The desktop display includes a PGU 31 and a reflection component. The reflection component includes a diffusion screen 32 and a curved mirror 33. Specifically, refer to dashed lines with arrows shown in FIG. 3. The PGU 31 generates imaging light, where the imaging light carries image information of the desktop display. The PGU 31 transmits the generated imaging light to the diffusion screen 32, and the diffusion screen 32 performs imaging based on the imaging light, and displays the image information of the desktop display. Subsequently, the imaging light continues to propagate, and is reflected, through the curved mirror 33, to eyes 34 of an observer viewing the desktop display, where the eyes 34 of the observer viewing the desktop display perceive a virtual image 35 of the image information of the desktop display. Refer to solid lines with arrows shown in FIG. 3. External light such as interference light is also transmitted to the curved mirror 33, and the curved mirror 33 reflects the interference light to the diffusion screen 32, to form reverse light. The diffusion screen 32 transmits the reverse light to the PGU 31. In this case, when light intensity of the reverse light is strong, the PGU 31 in the desktop display is also affected. The PGU 31 in the desktop display is similar to the PGU 32 in the HUD, and details are not described herein again.

FIG. 4 is a diagram of a structure of an optical path of a vehicle headlight 40 according to an embodiment of this application. The vehicle headlight 40 includes a light source 41, a collimation lens 42, a reflector 43, an optical modulator 44, and a lens 45. The lens 45 includes different lenses such as a convex lens and a concave lens. Specifically, refer to dashed lines with arrows shown in FIG. 4. The light source 41 is configured to generate a light beam, and transmit the light beam to the collimation lens 42. The light beam is circularly polarized light, elliptically polarized light, or the like. The collimation lens 32 is configured to collimate the light beam output by the light source, and transmit a collimated light beam to the reflector 43. The reflector 43 is configured to reflect the light beam once, so that the light beam is reflected to the optical modulator 44. The optical modulator 44 is configured to modulate the light beam based on image information of the vehicle headlight, to generate imaging light, and transmit the imaging light to the lens 45. The imaging light is linearly polarized light. Specifically, a polarization direction of the imaging light may be P polarization or S polarization. The lens 45 is configured to transmit the imaging light out. Refer to solid lines with arrows shown in FIG. 4. External light such as interference light is also transmitted to the lens 45. The lens 45 transmits the interference light to generate reverse light, and transmits the reverse light to the optical modulator 44. The reverse light affects the optical modulator 44. The optical modulator 44 is similar to the optical modulator 112 shown in FIG. 2, and details are not described herein again.

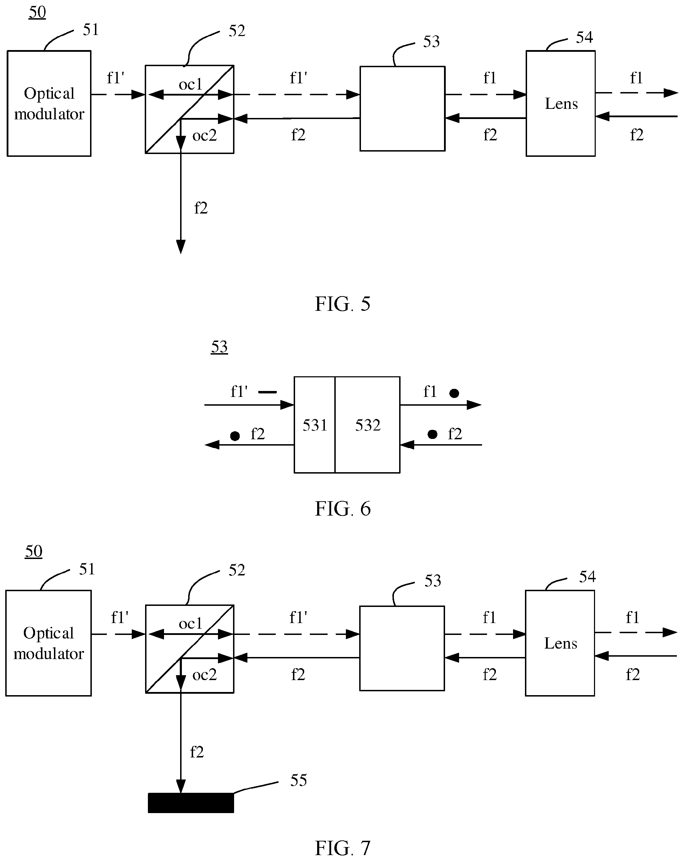

It can be learned that in the HUD, the desktop display, and the vehicle headlight, the reverse light affects the optical modulator. Therefore, embodiments of this application provide an optical system. The optical system may be a PGU or a vehicle headlight. The optical system can reduce or even eliminate an effect of reverse light on an optical modulator. FIG. 5 is a diagram of a structure of an optical system 50 according to an embodiment of this application. The optical system 50 includes an optical modulator 51 and a lens 54. The optical system 50 further includes: an optical splitting component 52 disposed between the optical modulator 51 and the lens 54, and a conductive component 53 disposed between the optical splitting component 52 and the lens 54. For example, the conductive component includes a transmission optical path oc1 and a reflection optical path oc2. The conductive component 53 and the optical modulator 51 are disposed on two sides of the transmission optical path oc1 of the optical splitting component 52. In this case, light may be transmitted from the conductive component 53 to the optical modulator 51 along the transmission optical path oc1, or may be transmitted from the optical modulator 51 to the conductive component 53 along the transmission optical path oc1. The transmitted light is usually transmitted in parallel. In addition, the conductive component 52 is further disposed in an incident direction of the reflection optical path oc2. The incident direction of the reflection optical path oc2 is not parallel to an emergent direction of the reflection optical path oc2. In other words, when light is transmitted from the conductive component 53 along the reflection optical path oc2, the light is not transmitted to the optical modulator 51.

Refer to dashed lines with arrows shown in FIG. 5. When the optical system 50 outputs imaging light, the optical modulator 51 is configured to generate imaging light f1' and transmit the imaging light f1' to the optical splitting component 52. A polarization direction of the imaging light f1' is a first polarization direction, and the first polarization direction is P polarization. The optical splitting component 52 is configured to transmit the imaging light f1' to the conductive component 53. Specifically, the imaging light f1' is transmitted to the conductive component 53 along the transmission optical path oc1. P polarization is also referred to as horizontal polarization, and S polarization is also referred to as vertical polarization. The optical splitting component 52 may be considered as an element that separates the P polarization from the S polarization. Based on characteristics of the P polarization and the S polarization, the optical splitting component 52 may transmit light whose polarization direction is the P polarization and reflect light whose polarization direction is the S polarization. Therefore, when the imaging light f1' whose polarization direction is the P polarization is transmitted to the optical splitting component 52, the imaging light is transmitted from the optical splitting component 52 to the conductive component 53.

The conductive component 53 is configured to adjust the polarization direction of the imaging light f1' to a second polarization direction, to obtain imaging light f1, and transmit the imaging light f1 to the lens 54. The first polarization direction is different from the second polarization direction. Specifically, the first polarization direction is the P polarization, and the second polarization direction is the S polarization. Polarization directions of the P polarization and the S polarization are at an angle of 90 degrees, and the polarization directions of the P polarization and the S polarization are orthogonal to each other.

For example, refer to FIG. 6. The conductive component 53 includes a magneto-optical crystal 531 disposed close to the optical splitting component 52 and a 1/2 wave plate 532 disposed close to the lens 54. Under an action of an external magnetic field, a phenomenon that a polarization direction of linearly polarized light is rotated when the linearly polarized light passes through a crystal is referred to as a Faraday effect. The crystal is referred to as a magneto optically active crystal, and is referred to as a magneto-optical crystal for short. Common magneto-optical crystals include yttrium iron garnet, gallium garnet, rare earth aluminate garnet, and the like. In addition, under an action of a predetermined magnetic field, the magneto-optical crystal may rotate, clockwise by a predetermined degree, a polarization direction of linearly polarized light that is transmitted through the magneto-optical crystal from left to right, or may rotate, clockwise by a predetermined degree, a polarization direction of linearly polarized light that is transmitted through the magneto-optical crystal from right to left. Specifically, refer to FIG. 6. A magnetic field is applied to the magneto-optical crystal 531. A magnitude of the applied magnetic field may enable the polarization direction of the imaging light f1' transmitted to the magneto-optical crystal 531 to be rotated clockwise by 45 degrees and then the imaging light f1' to be output to the 1/2 wave plate 532. The polarization direction of the imaging light f1' is the P polarization, and "-" in FIG. 6 indicates the P polarization (namely, parallel polarization). It should be noted that a specific magnitude of the magnetic field applied to the magneto-optical crystal 531 is related to a material of the magneto-optical crystal 531. The material of the magneto-optical crystal 531 and the magnitude of the magnetic field applied to the magneto-optical crystal 531 are not limited in embodiments of this application.

The 1/2 wave plate is also referred to as a half-wave plate, and the half-wave plate may rotate a polarization direction of linearly polarized light. When an included angle between a polarization direction of linearly polarized light incident to the 1/2 wave plate and a principal section of a crystal of the 1/2 wave plate is θ degrees, that a difference between the polarization direction of the linearly polarized light incident to the 1/2 wave plate and a polarization direction of linearly polarized light output from the 1/2 wave plate is 2θ degrees means that the polarization direction of the linearly polarized light output from the 1/2 wave plate is rotated clockwise by 2θ degrees relative to the polarization direction of the linearly polarized light incident to the 1/2 wave plate, and that a difference between a polarization direction of linearly polarized light reversely incident to the 1/2 wave plate and a polarization direction of linearly polarized light output from the 1/2 wave plate is 2θ degrees means that the polarization direction of the linearly polarized light output from the 1/2 wave plate is rotated counterclockwise by 2θ degrees relative to the polarization direction of the linearly polarized light reversely incident to the 1/2 wave plate. As shown in FIG. 6, when an included angle between the polarization direction of the imaging light output by the magneto-optical crystal 531 and the principal section of the crystal of the 1/2 wave plate is 22.5 degrees, the principal section of the crystal of the 1/2 wave plate rotates clockwise by 22.5 degrees relative to the polarization direction of the imaging light output by the magneto-optical crystal 531. Therefore, when the polarization direction of the imaging light output by the magneto-optical crystal 531 passes through the 1/2-wave plate, the polarization direction of the imaging light is rotated clockwise by 45 degrees.

In other words, when the imaging light f1' passes through the magneto-optical crystal 531, the polarization direction of the imaging light f1' is rotated clockwise by 45 degrees. When the imaging light f1' passes through the 1/2 wave plate 532, the polarization direction of the imaging light f1' is rotated clockwise by 45 degrees again. The polarization direction of the imaging light f1' is rotated clockwise by (45+45=90) degrees in total. Therefore, for the imaging light f1 output by the conductive component 53, a polarization direction of the imaging light f1 is the S polarization, and "·" in FIG. 6 indicates the S polarization (namely, vertical polarization). As shown in FIG. 5, the conductive component 53 transmits the imaging light f1 to the lens 54.

The lens 54 is configured to output the imaging light f1. Therefore, the imaging light generated by the optical modulator 51 is output through the lens 54, to implement a function of outputting the imaging light f1 in the optical system 50.

Refer to solid lines with arrows shown in FIG. 5. When the optical system 50 receives reverse light, the lens 54 is further configured to receive the reverse light f2, and transmit the reverse light f2 to the conductive component 53. A polarization direction of the reverse light f2 is the second polarization direction, and the second polarization direction is the S polarization.

The conductive component 53 is further configured to transmit the reverse light f2 to the optical splitting component 52. Specifically, as shown in FIG. 6, the polarization direction of the reverse light f2 is the S polarization, and "·" in FIG. 6 indicates the S polarization (namely, vertical polarization). When passing through the conductive component 53, the reverse light f2 first passes through the 1/2 wave plate 532, and then passes through the magneto-optical crystal 531. Because the included angle between the polarization direction of the imaging light output by the magneto-optical crystal 531 and the principal section of the crystal of the 1/2 wave plate 532 is 22.5 degrees, the 1/2 wave plate 532 rotates the polarization direction of the incident imaging light clockwise by 45 degrees, and the 1/2 wave plate rotates the polarization direction of the incident reverse light f2 counterclockwise by 45 degrees. Subsequently, when the reverse light whose polarization direction is rotated counterclockwise by 45 degrees passes through the magneto-optical crystal 531, the magneto-optical crystal 531 rotates the polarization direction of the reverse light f2 clockwise by 45 degrees.

In other words, when the reverse light f2 passes through the 1/2 wave plate 532, the polarization direction of the reverse light f2 is rotated counterclockwise by 45 degrees. When the reverse light f2 passes through the magneto-optical crystal 531, the polarization direction of the reverse light f2 is rotated clockwise by 45 degrees. The polarization direction of the reverse light f2 is rotated clockwise by (-45+45=0) degrees in total. Therefore, for the reverse light f2 output by the conductive component 53, the polarization direction of the reverse light f2 is the S polarization, and "·" in FIG. 6 indicates S polarization (namely, vertical polarization). As shown in FIG. 5, the conductive component 53 transmits the reverse light f2 to the optical splitting component 52.

The optical splitting component 52 is further configured to reflect the reverse light f2. Specifically, the reverse light f2 is reflected along the reflection optical path oc2. Because of a difference between the transmission optical path oc1 and the reflection optical path oc2, the reverse light is not transmitted to the optical modulator 51.

In the optical system, the optical modulator generates the imaging light, where the polarization direction of the imaging light is the first polarization direction (the P polarization), and transmits the imaging light to the optical splitting component. The optical splitting component transmits the imaging light to the conductive component (along the transmission optical path oc1). The conductive component is configured to: adjust the polarization direction of the imaging light to the second polarization direction (the S polarization), and transmit the imaging light whose polarization direction is the second polarization direction to the lens. The lens outputs the imaging light. It can be learned that in the optical system, output of the imaging light is not affected. When the optical system receives the reverse light, the lens first receives the reverse light, where the polarization direction of the reverse light is the second polarization direction. The lens transmits the reverse light to the conductive component. The conductive component transmits the reverse light to the optical splitting component, and the conductive component does not adjust the polarization direction of the reverse light. Therefore, the polarization direction of the reverse light transmitted to the optical splitting component is the second polarization direction. The optical splitting component reflects the reverse light (along the reflection optical path oc2). In other words, the optical splitting component transmits, to the conductive component, the received imaging light output by the optical modulator, and the optical splitting component reflects the received reverse light output by the conductive component. Based on a difference between reflection and transmission, it can be learned that the reverse light is not transmitted to the optical modulator. Therefore, the reverse light does not affect the optical modulator.

Specifically, as shown in FIG. 7, the optical system 50 further includes an optical absorption component 55. For example, the optical absorption component 55 is disposed in a reflection direction of the reflection optical path oc2. Therefore, the reverse light reflected by the optical splitting component 52 along the reflection optical path oc2 is transmitted to the optical absorption component 55, and the optical absorption component 55 is configured to absorb the reverse light reflected by the optical splitting component 52.

Specifically, the optical absorption component 55 includes any one of the following: a black velvet cloth, a metal sheet plated with black paint, and a photodiode. The black velvet cloth and the metal sheet plated with black paint only absorb the reverse light, and are configured to absorb the reverse light. The photodiode converts light intensity of the received reverse light into an electrical signal, and a level of the electrical signal is positively correlated with the light intensity of the reverse light.

Therefore, when the optical system includes the optical absorption component, the reverse light is reflected to the optical absorption component through the optical splitting component, so that the optical absorption component absorbs the reverse light, to reduce impact of the reverse light on another component in the optical system, and avoid conversion of the reverse light into heat energy.

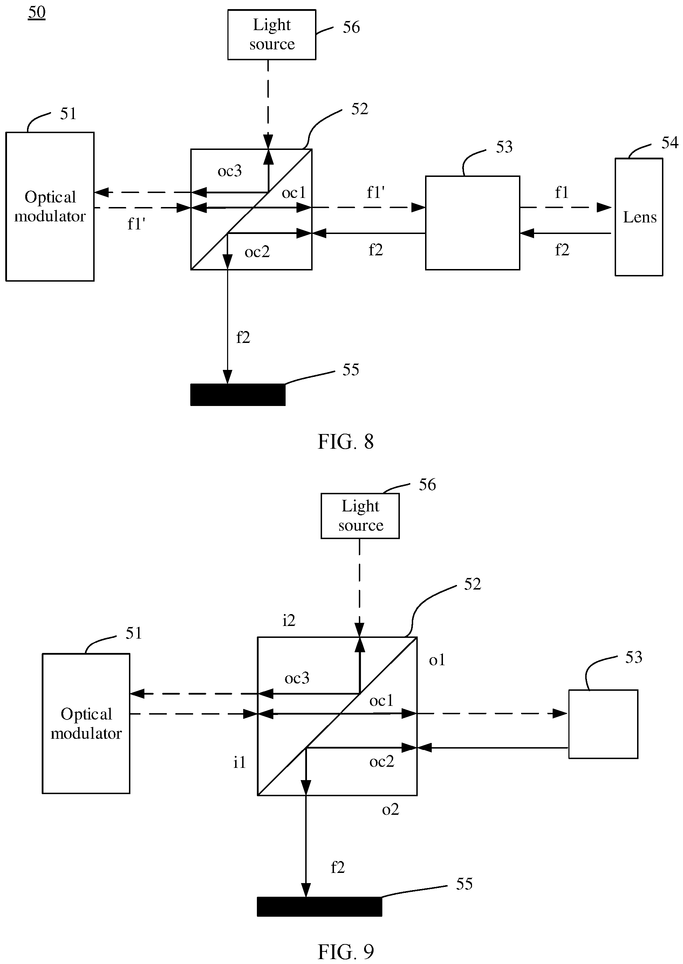

As shown in FIG. 8, an embodiment of this application provides another optical system 50. The optical system 50 further includes a light source 56. The light source 56 is disposed on a side that is of an optical splitting component 52 and that is opposite to an optical absorption component 55. For example, the optical splitting component 52 further includes a reflection optical path oc3. The light source 56 is disposed in an incident direction of the reflection optical path oc3 of the optical splitting component 52. An optical modulator 51 is disposed in a reflection direction of the reflection optical path oc3 of the optical splitting component 52. The light source 56 is configured to generate a light beam, where a polarization direction of the light beam is a second polarization direction, and the second polarization direction is S polarization. The optical splitting component 52 is configured to reflect, to the optical modulator 51, the light beam output by the light source 56. Specifically, the optical splitting component 52 reflects, to the optical modulator 51 along the reflection optical path oc3, the light beam output by the light source 56. The optical modulator 51 is specifically configured to modulate, based on image data, the light beam output by the light source 56, to generate imaging light f1' including the image information. A polarization direction of the imaging light is P polarization.

Specifically, as shown in FIG. 9, the optical splitting component 52 may be specifically a polarization optical splitting prism. The polarization optical splitting prism may transmit light whose polarization direction is the P polarization and reflect light whose polarization direction is the S polarization. The polarization optical splitting prism includes an incident surface i1, an incident surface i2, an emergent surface o1, and an emergent surface o2. The incident surface i1 is opposite to the emergent surface o1, and the incident surface i2 is opposite to the emergent surface o2. The optical modulator 51 is disposed on a side of the incident surface i1 of the polarization optical splitting prism. A conductive component 53 is disposed on a side of the emergent surface o1 of the polarization optical splitting prism. The light source 56 is disposed on a side of the incident surface i2 of the polarization optical splitting prism. The optical absorption component 55 is disposed on a side of the emergent surface o2 of the polarization optical splitting prism. For example, the incident surface i1 and the emergent surface o1 form a transmission optical path oc1. The emergent surface o1 and the emergent surface o2 form a reflection optical path oc2. The incident surface i1 and the incident surface i2 form the reflection optical path oc3.

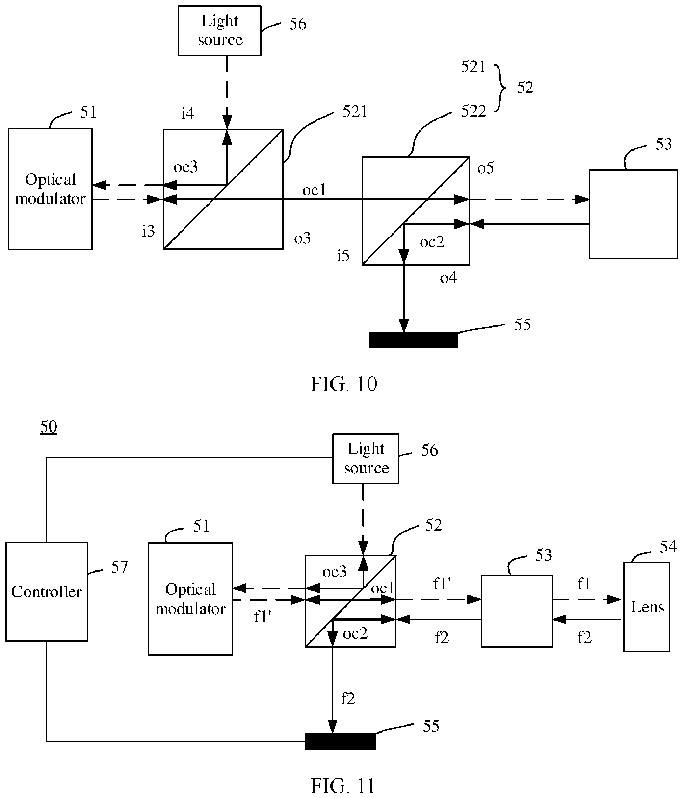

Specifically, as shown in FIG. 10, the optical splitting component 52 may include a polarization optical splitting prism 521 and a polarization optical splitting prism 522. The polarization optical splitting prism 521 includes an incident surface i3, an incident surface i4, and an emergent surface o3. The incident surface i3 is opposite to the emergent surface o3. The polarization optical splitting prism 522 includes an incident surface i5, an emergent surface o4, and an emergent surface o5. The incident surface i5 is opposite to the emergent surface o5. The incident surface i5 of the polarization optical splitting prism 522 is disposed on a side of the emergent surface o3 of the polarization optical splitting prism 521. The optical modulator 51 is disposed on a side of the incident surface i3 of the polarization optical splitting prism 521. The light source 56 is disposed on a side of the incident surface i4 of the polarization optical splitting prism 521. The conductive component 53 is disposed on a side of the emergent surface o5 of the polarization optical splitting prism 522. The optical absorption component 55 is disposed on a side of the emergent surface o4 of the polarization optical splitting prism 522. For example, the incident surface i3, the emergent surface o3, the incident surface i5, and the emergent surface o5 form the transmission optical path oc1. The emergent surface o4 and the emergent surface o5 form the reflection optical path oc2. The incident surface i3 and the incident surface i4 form the reflection optical path oc3.

For example, as shown in FIG. 11, the optical system 50 further includes a controller 57. The controller 57 is connected to the light source 56 and the optical absorption component 55. The controller 57 is configured to adjust, based on light intensity of reverse light f2 absorbed by the optical absorption component 55, light intensity of the light beam generated by the light source 56. For example, when the optical absorption component 55 is a photodiode, the reverse light f2 that is reflected by the optical splitting component 52 to the optical absorption component 55 is transmitted to the photodiode. The photodiode converts the light intensity of the reverse light into an electrical signal. Generally, stronger light intensity of the reverse light indicates a higher level of the electrical signal, and weaker light intensity of the reverse light indicates a lower level of the electrical signal. Because the controller 57 is connected to the optical absorption component 55, the controller 57 may receive the electrical signal converted by the photodiode from the light intensity of the reverse light. In addition, the controller 57 is connected to the light source 56. The controller 57 may adjust, when the level of the electrical signal is high, the light intensity of the light beam generated by the light source 56 to increase, and may adjust, when the level of the electrical signal is low, the light intensity of the light beam generated by the light source 56 to decrease.

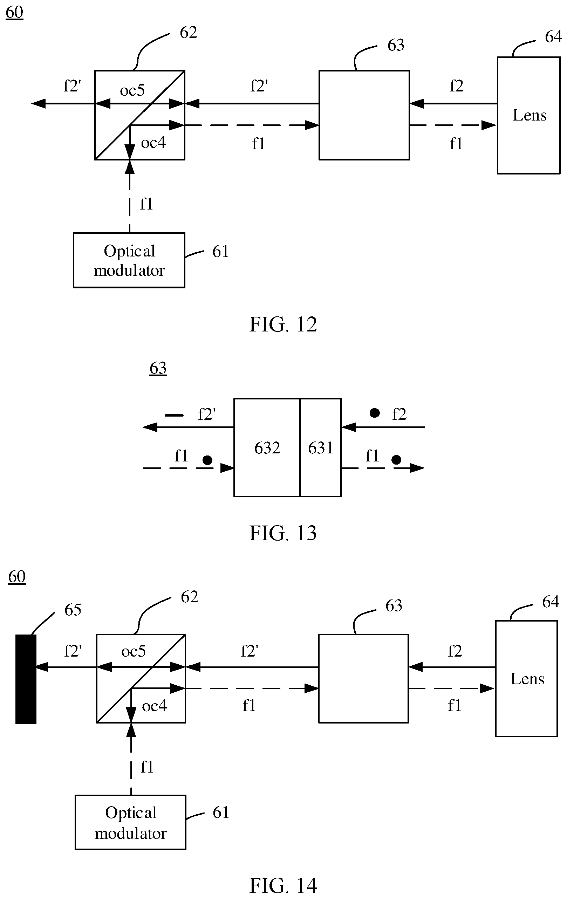

In some other embodiments, a polarization direction of imaging light generated by an optical modulator may be a second polarization direction (the S polarization). Specifically, FIG. 12 is a diagram of a structure of an optical system 60 according to an embodiment of this application. The optical system 60 includes an optical modulator 61 and a lens 64. The optical system 60 further includes: an optical splitting component 62 disposed between the optical modulator 61 and the lens 64, and a conductive component 63 disposed between the optical splitting component 62 and the lens 64. For example, the optical splitting component 62 includes a reflection optical path oc4 and a transmission optical path oc5. The conductive component 63 and the optical modulator 61 are disposed in a reflection direction and an incident direction of the reflection optical path oc4 of the optical splitting component 62, so that light may be transmitted from the optical modulator 61 to the conductive component 63 along the reflection optical path oc4 of the optical splitting component 62. The incident direction of the reflection optical path oc4 is not parallel to the reflection direction of the reflection optical path oc4. In addition, the conductive component 63 is further disposed on a side of the transmission optical path oc5. Transmitted light is usually transmitted in parallel. In other words, when light is transmitted from the conductive component 63 along the transmission optical path oc5, the light is not transmitted to the optical modulator 61.

Refer to dashed lines with arrows shown in FIG. 12. When the optical system 60 outputs imaging light, the optical modulator 61 is configured to: generate imaging light f1, and transmit the imaging light f1 to the optical splitting component 62. A polarization direction of the imaging light f1 is a second polarization direction, and the second polarization direction is the S polarization. The optical splitting component 62 is configured to reflect the imaging light f1 to the conductive component 63. Specifically, the optical splitting component 62 reflects the imaging light f1 to the conductive component 63 along the reflection optical path oc4. The optical splitting component 62 is the same as the optical splitting component 52, and may separate light whose polarization direction is the P polarization from light whose polarization direction is the S polarization. The optical splitting component 62 may transmit the light whose polarization direction is the P polarization and reflect the light whose polarization direction is the S polarization. Therefore, when the imaging light f1 whose polarization direction is the S polarization is transmitted to the optical splitting component 62, the imaging light f1 is reflected to the conductive component 63 along the reflection optical path oc4 of the optical splitting component 62.

The conductive component 63 is configured to transmit the imaging light f1 to the lens 64. For example, refer to FIG. 13. The conductive component 63 includes a 1/2 wave plate 632 disposed close to the optical splitting component 62 and a magneto-optical crystal 631 disposed close to the lens 64. The 1/2 wave plate is also referred to as a half-wave plate, and the half-wave plate may rotate a polarization direction of linearly polarized light. When an included angle between a polarization direction of linearly polarized light incident to the 1/2 wave plate and a principal section of a crystal of the 1/2 wave plate is θ degrees, that a difference between the polarization direction of the linearly polarized light incident to the 1/2 wave plate and a polarization direction of linearly polarized light transmitted from the 1/2 wave plate is 2θ degrees means that the polarization direction of the linearly polarized light output from the 1/2 wave plate is rotated clockwise by 2θ degrees relative to the polarization direction of the linearly polarized light incident to the 1/2 wave plate, and that a difference between a polarization direction of linearly polarized light reversely incident to the 1/2 wave plate and a polarization direction of linearly polarized light output from the 1/2 wave plate is 2θ degrees means that the polarization direction of the linearly polarized light output from the 1/2 wave plate is rotated counterclockwise by 2θ degrees relative to the polarization direction of the linearly polarized light reversely incident to the 1/2 wave plate. As shown in FIG. 13, the polarization direction of the imaging light f1 is the S polarization, and "·" in FIG. 10 indicates the S polarization (namely, vertical polarization). When the included angle between the polarization direction of the imaging light f1 reflected by the optical splitting component 62 and the principal section of the crystal of the 1/2 wave plate 642 is -22.5 degrees, that is, the principal section of the crystal of the 1/2 wave plate rotates counterclockwise by 22.5 degrees relative to the polarization direction of the imaging light output by the magneto-optical crystal 531, the polarization direction of the imaging light f1 is rotated counterclockwise by 45 degrees through the 1/2 wave plate 632.

Under an action of an external magnetic field, a phenomenon that a polarization direction of linearly polarized light is rotated when the linearly polarized light passes through a crystal is referred to as a Faraday effect. The crystal is referred to as a magneto optically active crystal, and is referred to as a magneto-optical crystal for short. Common magneto-optical crystals include yttrium iron garnet, gallium garnet, rare earth aluminate garnet, and the like. In addition, under an action of a predetermined magnetic field, the magneto-optical crystal may rotate, clockwise by a predetermined degree, a polarization direction of linearly polarized light that is transmitted through the magneto-optical crystal in a forward direction, or may rotate, clockwise by a predetermined degree, a polarization direction of linearly polarized light that is transmitted through the magneto-optical crystal in a reverse direction. Specifically, as shown in FIG. 13, a magnetic field is applied to the magneto-optical crystal 631. A magnitude of the applied magnetic field may enable the polarization direction of the imaging light f1 transmitted to the magneto-optical crystal 631 to rotate clockwise by 45 degrees before being output. It should be noted that a specific magnitude of the magnetic field applied to the magneto-optical crystal 631 is related to a material of the magneto-optical crystal 631. The material of the magneto-optical crystal 631 and the magnitude of the magnetic field applied to the magneto-optical crystal 631 are not limited in embodiments of this application.

In other words, when the imaging light f1 passes through the 1/2 wave plate 632, the polarization direction of the imaging light f1 is rotated counterclockwise by 45 degrees. When the imaging light f1 passes through the magneto-optical crystal 631, the polarization direction of the imaging light f1 is rotated clockwise by 45 degrees. Therefore, the polarization direction of the imaging light f1 is rotated clockwise by (-45+45=0) degrees in total. For the imaging light f1 output by the conductive component 63, the polarization direction of the imaging light f1 is the S polarization, and "·" in FIG. 13 indicates the S polarization (namely, vertical polarization). As shown in FIG. 12, the conductive component 63 transmits the imaging light f1 to the lens 64.

The lens 64 is configured to output the imaging light f1. Therefore, the imaging light generated by the optical modulator 61 is output through the lens 64, to implement a function of outputting the imaging light f1 in the optical system 60.

Refer to solid lines with arrows shown in FIG. 12. When the optical system 60 receives reverse light, the lens 64 is further configured to: receive reverse light f2, and transmit the reverse light f2 to the conductive component 63. A polarization direction of the reverse light f2 is the second polarization direction, and the second polarization direction is the S polarization.

The conductive component 63 is further configured to adjust the polarization direction of the reverse light f2 to a first polarization direction (the P polarization), and transmit the reverse light f2 to the optical splitting component 62. The first polarization direction is different from the second polarization direction. Specifically, the first polarization direction is the P polarization, and the second polarization direction is the S polarization. Polarization directions of the P polarization and the S polarization are at an angle of 90 degrees, and the polarization directions of the P polarization and the S polarization are orthogonal to each other.

For example, as shown in FIG. 13, the polarization direction of the reverse light f2 is the S polarization, and "·" in FIG. 13 indicates the S polarization (namely, vertical polarization). When passing through the conductive component 63, the reverse light f2 first passes through the magneto-optical crystal 631, and then passes through the 1/2 wave plate 632. The magneto-optical crystal 631 rotates the polarization direction of the reverse light f2 clockwise by 45 degrees. Because the included angle between the polarization direction of the imaging light f1 reflected by the optical splitting component 62 and the principal section of the crystal of the 1/2 wave plate 632 is -22.5 degrees, the 1/2 wave plate 632 rotates the polarization direction of the imaging light f1 counterclockwise by 45 degrees, and then the 1/2 wave plate 632 rotates the polarization direction of the reverse light f2 clockwise by 45 degrees.

In other words, when the reverse light f2 passes through the magneto-optical crystal 631, the polarization direction of the reverse light f2 is rotated clockwise by 45 degrees. When the reverse light f2 passes through the 1/2 wave plate 632, the polarization direction of the reverse light f2 is rotated clockwise by 45 degrees again. Therefore, the polarization direction of the reverse light f2 is rotated clockwise by (45+45=90) degrees in total. For the reverse light f2 output by the conductive component 63, the polarization direction of the reverse light f2 is the P polarization, and "-" in FIG. 13 indicates the P polarization (namely, horizontal polarization). As shown in FIG. 12, the conductive component 63 transmits the reverse light f2 to the optical splitting component 62.

The optical splitting component 62 is further configured to transmit the reverse light f2. Specifically, the optical splitting component 62 transmits the reverse light f2 along the transmission optical path oc5. Because of a difference between the transmission optical path oc5 and the reflection optical path oc4, the reverse light is not transmitted to the optical modulator 61.

In the optical system, the optical modulator generates the imaging light, where the polarization direction of the imaging light is the second polarization direction (the S polarization), and transmits the imaging light to an optical splitting component. The optical splitting component reflects the imaging light to the conductive component (along the reflection optical path oc4). The conductive component transmits the imaging light to the lens. The lens outputs the imaging light. It can be learned that in the optical system, the output of the imaging light is not affected. When the optical system receives the reverse light, the lens first receives the reverse light, where the polarization direction of the reverse light is the second polarization direction. The lens transmits the reverse light to the conductive component. The conductive component is configured to adjust the polarization direction of the reverse light to the first polarization direction (the P polarization). Therefore, the polarization direction of the reverse light transmitted to the optical splitting component is the first polarization direction, and the optical splitting component transmits the reverse light (along the transmission optical path oc5). In other words, the optical splitting component reflects, to the conductive component, the received imaging light output by the optical modulator, and the optical splitting component transmits the received reverse light output by the conductive component. Based on a difference between reflection and transmission, it can be learned that the reverse light is not transmitted to the optical modulator. Therefore, the reverse light does not affect the optical modulator.

Specifically, as shown in FIG. 14, the optical system 60 further includes an optical absorption component 65. For example, the optical absorption component 65 is disposed on the other side of the transmission optical path oc5. Therefore, the reverse light transmitted through the optical splitting component 62 along the transmission optical path oc5 is transmitted to the optical absorption component 65, and the optical absorption component 65 is configured to absorb the reverse light transmitted through the optical splitting component 62.

Specifically, the optical absorption component 65 includes any one of the following: a black velvet cloth, a metal sheet plated with black paint, and a photodiode. The black velvet cloth and the metal sheet plated with black paint only absorb the reverse light, and are configured to absorb the reverse light. The photodiode converts light intensity of the received reverse light into an electrical signal, and a level of the electrical signal is positively correlated with the light intensity of the reverse light.

Therefore, when the optical system includes the optical absorption component, the reverse light is transmitted to the optical absorption component through the optical splitting component, so that the optical absorption component absorbs the reverse light, to reduce impact of the reverse light on another component in the optical system, and avoid conversion of the reverse light into heat energy.

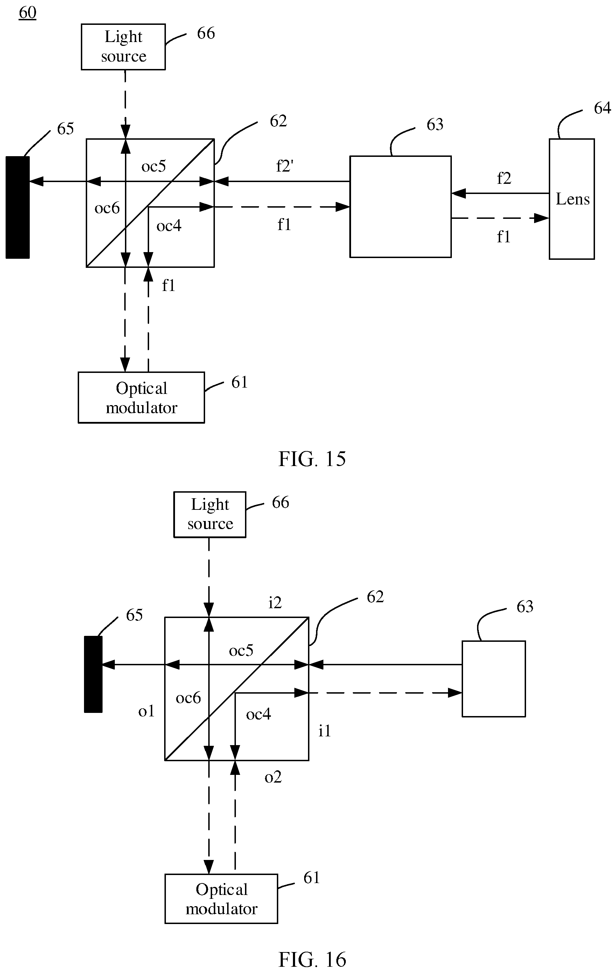

In some other embodiments, as shown in FIG. 15, the optical system 60 further includes a light source 66. The light source 66 is disposed on a side that is of the optical splitting component 62 and that is opposite to the optical modulator 61. For example, the optical splitting component 62 further includes a transmission optical path oc6. The light source 66 is disposed on one side of the transmission optical path oc6 of the optical splitting component 62, and the optical modulator 61 is disposed on the other side of the transmission optical path oc6 of the optical splitting component 62. The light source 66 is configured to generate a light beam, where a polarization direction of the light beam is the first polarization direction, and the first polarization direction is the P polarization. The optical splitting component 62 is configured to transmit, to the optical modulator 61, the light beam output by the light source 66. Specifically, the optical splitting component 62 transmits, to the optical modulator 61 along the transmission optical path oc6, the light beam output by the light source 66. The optical modulator 61 is specifically configured to modulate, based on image data, the light beam output by the light source 66, to generate imaging light f1 including the image information. A polarization direction of the imaging light is the S polarization.

Specifically, as shown in FIG. 16, the optical splitting component 62 may be specifically a polarization optical splitting prism. The polarization optical splitting prism may transmit light whose polarization direction is the P polarization and reflect light whose polarization direction is the S polarization. The polarization optical splitting prism includes an incident surface i1, an incident surface i2, an emergent surface o1, and an emergent surface o2. The incident surface i1 is opposite to the emergent surface o1, and the incident surface i2 is opposite to the emergent surface o2. The conductive component 63 is disposed on a side of the incident surface i1 of the polarization optical splitting prism. The light source 66 is disposed on a side of the incident surface i2 of the polarization optical splitting prism. The optical absorption component 65 is disposed on a side of the emergent surface o1 of the polarization optical splitting prism. The optical modulator 61 is disposed on a side of the emergent surface o2 of the polarization optical splitting prism. For example, the emergent surface o2 and the incident surface i1 form the reflection optical path oc4. The incident surface i1 and the emergent surface o1 form the transmission optical path oc5. The incident surface i2 and the emergent surface o2 form the transmission optical path oc6.

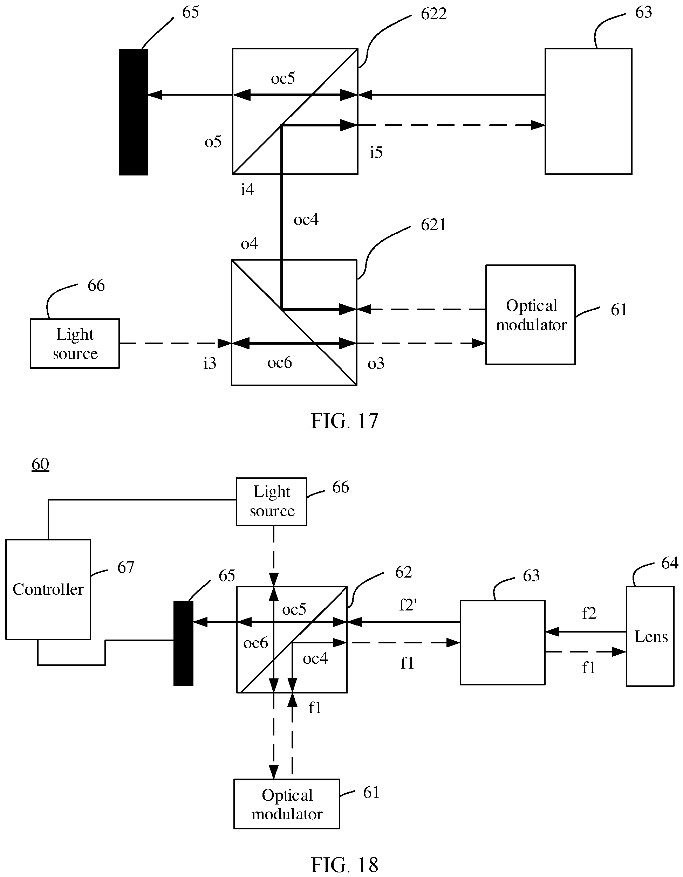

Specifically, as shown in FIG. 17, the optical splitting component 62 may include a polarization optical splitting prism 621 and a polarization optical splitting prism 622. The polarization optical splitting prism 621 includes an incident surface i3, an emergent surface o3, and an emergent surface o4. The incident surface i3 is opposite to the emergent surface o3. The polarization optical splitting prism 622 includes an incident surface i4, an incident surface i5, and an emergent surface o5. The incident surface i5 is opposite to the emergent surface o5. The incident surface i4 of the polarization optical splitting prism 622 is disposed on a side of the emergent surface o4 of the polarization optical splitting prism 621. The light source 66 is disposed on a side of the incident surface i3 of the polarization optical splitting prism 621. The optical modulator 61 is disposed on a side of the emergent surface o3 of the polarization optical splitting prism 621. The conductive component 63 is disposed on a side of the incident surface i5 of the polarization optical splitting prism 622. The optical absorption component 65 is disposed on aside of the emergent surface o5 of the polarization optical splitting prism 622. For example, the emergent surface o3, the emergent surface o4, the incident surface i4, and the incident surface i5 form the reflection optical path oc4. The incident surface i5 and the emergent surface o5 form the transmission optical path oc5. The incident surface i3 and the emergent surface o3 form the transmission optical path oc6.

For example, as shown in FIG. 18, the optical system 60 further includes a controller 67. The controller 67 is connected to the light source 66 and the optical absorption component 65. The controller 67 is configured to adjust, based on light intensity of the reverse light f2 absorbed by the optical absorption component 65, light intensity of the light beam generated by the light source 66. For example, when the optical absorption component 65 is a photodiode, the reverse light f2 transmitted through the optical splitting component 62 to the optical absorption component 65 is transmitted to the photodiode. The photodiode converts the light intensity of the reverse light into an electrical signal. Generally, stronger light intensity of the reverse light indicates a higher level of the electrical signal, and weaker light intensity of the reverse light indicates a lower level of the electrical signal. Because the controller 67 is connected to the optical absorption component 65, the controller 67 may receive the electrical signal converted by the photodiode from the light intensity of the reverse light. In addition, the controller 67 is connected to the light source 66. The controller 67 may adjust, when the level of the electrical signal is high, the light intensity of the light beam generated by the light source 66 to increase, and may adjust, when the level of the electrical signal is low, the light intensity of the light beam generated by the light source 66 to decrease.

The polarization direction of the imaging light f1 output by the lens in the optical system 50 shown in FIG. 5, FIG. 7, and FIG. 8 and the optical system 60 shown in FIG. 12, FIG. 14, and FIG. 15 is the S polarization. The polarization direction of the imaging light f1 is specifically determined by the optical modulator and the conductive component in the optical system. However, the polarization direction of the reverse light f2 received by the optical system cannot be completely determined. To ensure that the polarization direction of the reverse light received by the lens in the optical system is the S polarization, in the optical system 50 shown in FIG. 5, FIG. 7, and FIG. 8 and the optical system 60 shown in FIG. 12, FIG. 14, and FIG. 15, a polarizer is disposed on a side that is of the conductive component and that is away from the optical splitting component.

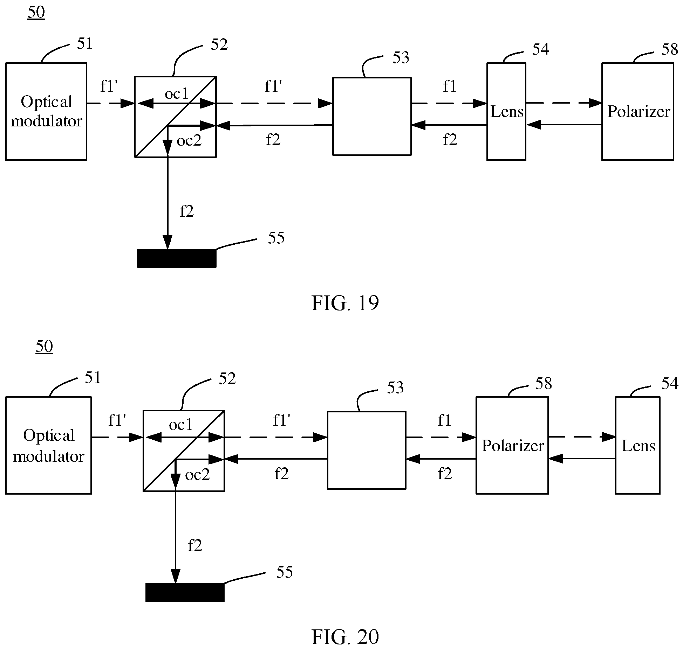

As shown in FIG. 19, the optical system 50 shown in FIG. 7 is used as an example of the optical system. Along an optical path of the optical system 50, a polarizer 58 is disposed behind the lens 54. The polarizer 58 is configured to transmit the imaging light f1 whose polarization direction is the second polarization direction. The polarizer 58 is further configured to transmit the reverse light f2 whose polarization direction is the second polarization direction. Specifically, the imaging light f1 whose polarization direction is the S polarization and that is output by the lens 54 is output through the polarizer 58, and the reverse light f2 whose polarization direction is the S polarization is received by the lens 54 through the polarizer 58.

In some other embodiments, along an optical path of the optical system, the polarizer may alternatively be disposed between the conductive component and the lens. As shown in FIG. 20, the optical system 50 shown in FIG. 7 is used as an example of the optical system. Along the optical path of the optical system 50, a polarizer 58 is disposed between the conductive component 53 and the lens 54. The polarizer 58 is configured to transmit the imaging light f1 whose polarization direction is the second polarization direction. The polarizer 58 is further configured to transmit the reverse light f2 whose polarization direction is the second polarization direction. Specifically, the imaging light f1 whose polarization direction is the S polarization and that is output by the conductive component is transmitted to the lens 54 through the polarizer 58, and is output by the lens 54. The lens 54 receives the reverse light f2, and transmits the reverse light f2 whose polarization direction is the S polarization to the conductive component 53 through the polarizer 58.

In other words, the polarizer is disposed on a side that is of the conductive component and that is away from the optical splitting component, and the disposed polarizer transmits light whose polarization direction is the second polarization direction (the S polarization). A location at which the polarizer is disposed is not limited in embodiments of this application.

The optical system 50 shown in FIG. 5, FIG. 7, and FIG. 8 and the optical system 60 shown in FIG. 12, FIG. 14, and FIG. 15 may be directly applied to a PGU, to implement the foregoing PGU functions.

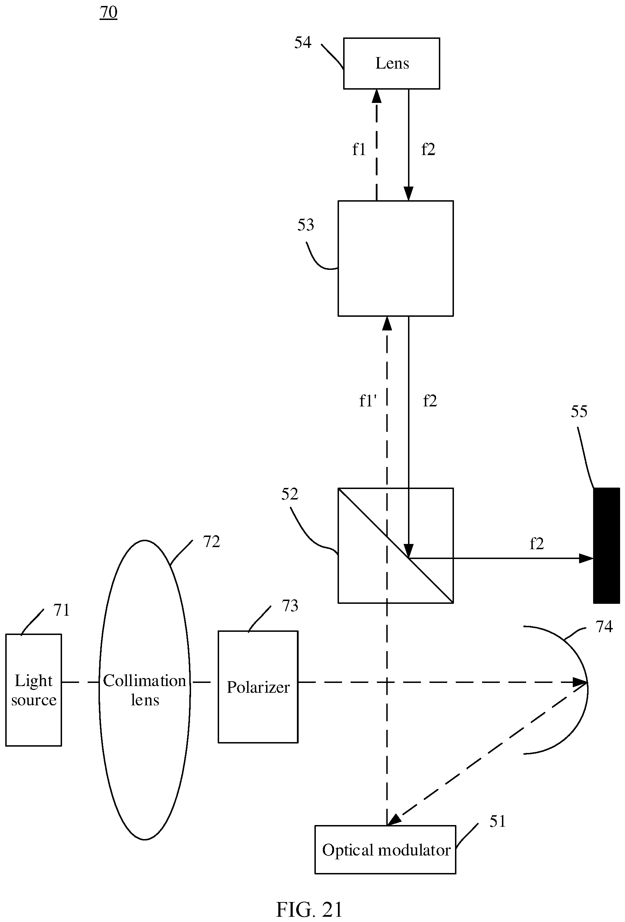

In some embodiments, the optical system 50 shown in FIG. 7 may be further applied to a vehicle headlight. FIG. 21 is a diagram of a structure of an optical system 70 according to an embodiment of this application. Based on the optical system 50 shown in FIG. 7, the optical system 70 further includes a light source 71, a collimation lens 72, a polarizer 73, and a reflector 74. Specifically, refer to dashed lines with arrows shown in FIG. 21. The light source 71 is configured to generate a light beam, and transmit the light beam to the collimation lens 72 when the light beam is circularly polarized light, elliptically polarized light, or the like. The collimation lens 72 is configured to collimate the light beam output by the light source 71, and transmit the collimated light beam to the polarizer 73. The polarizer 73 transmits a light beam whose polarization direction is S polarization in the collimated light beam to the reflector 74. The reflector 74 is configured to reflect the light beam whose polarization direction is the S polarization once, so that the light beam is reflected to the optical modulator 51. The optical modulator 51 is configured to: modulate the light beam based on image information of a vehicle headlight, to generate imaging light f1', where a polarization direction of the imaging light f1' is P polarization; and transmit the imaging light f1' to the lens 54 through the optical splitting component 52 and the conductive component 53. For details, refer to FIG. 7. Details are not described herein again. Reverse light f2 received by the lens 54 is transmitted to the optical absorption component 55 through the conductive component 53 and the optical splitting component 52. For details, refer to FIG. 7. Details are not described herein again.

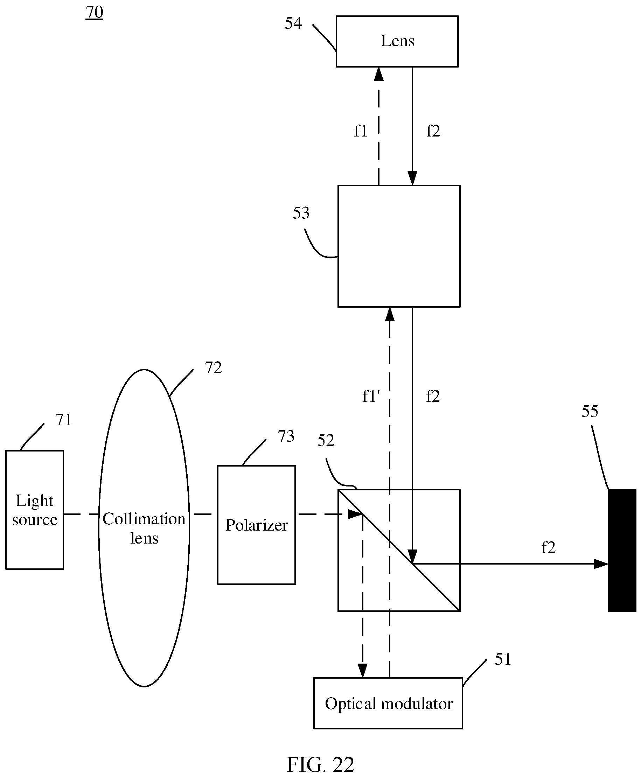

Based on the optical system 70 shown in FIG. 21, the reflector 74 is omitted in the optical system 70 shown in FIG. 22. Specifically, refer to FIG. 22. The light source 71 is configured to generate a light beam and transmit the light beam to the collimation lens 72. The collimation lens 72 is configured to collimate the light beam output by the light source 71, and transmit the collimated light beam to the polarizer 73. The polarizer 73 transmits a light beam whose polarization direction is the S polarization in the collimated light beam to the optical splitting component 52. The optical splitting component 52 is configured to reflect the light beam whose polarization direction is the S polarization to the optical modulator 51.

Specifically, a polarizer may be further disposed on a side that is of the conductive component 53 and that is away from the optical splitting component. The disposed polarizer transmits light whose polarization direction is the second polarization direction (the S polarization), so that the optical system 70 can transmit, to the conductive component 53, the received reverse light whose polarization direction is the S polarization in the reverse light.

For example, in the optical system 70 shown in FIG. 21 and FIG. 22, if the polarization direction of the light beam generated by the light source is the second polarization direction (the S polarization), the polarizer 73 may be omitted.

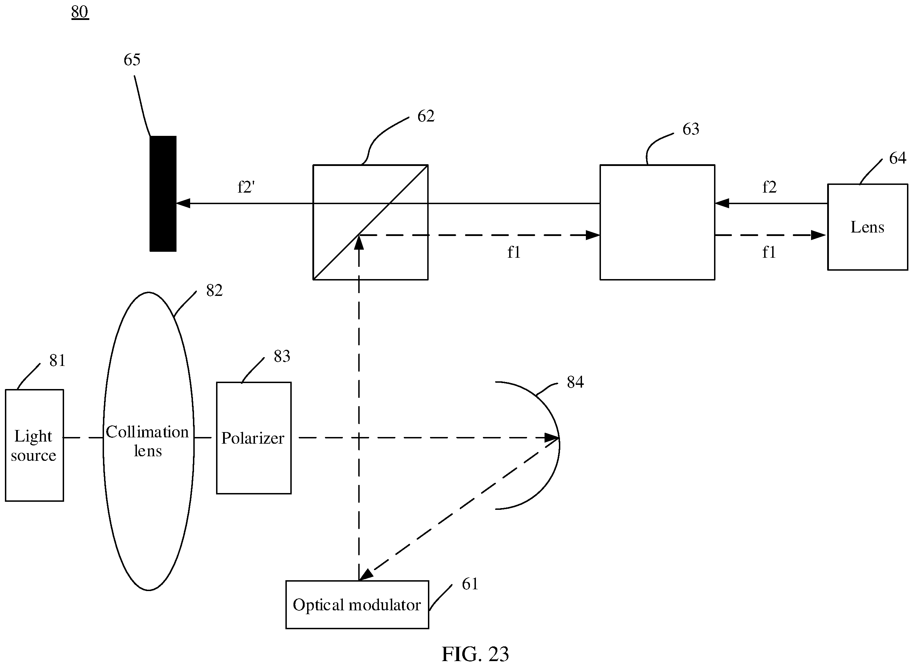

In some other embodiments, the optical system 60 shown in FIG. 14 may be further applied to a vehicle headlight. FIG. 23 is a diagram of a structure of an optical system 80 according to an embodiment of this application. Based on the optical system 60 shown in FIG. 14, the optical system 80 further includes a light source 81, a collimation lens 82, a polarizer 83, and a reflector 84. Specifically, refer to dashed lines with arrows shown in FIG. 23. The light source 81 is configured to generate a light beam, and transmit the light beam to the collimation lens 82 when the light beam is circularly polarized light, elliptically polarized light, or the like. The collimation lens 82 is configured to collimate the light beam output by the light source 81, and transmit the collimated light beam to the polarizer 83. The polarizer 83 transmits a light beam whose polarization direction is P polarization in the collimated light beam to the reflector 84. The reflector 84 is configured to reflect the light beam whose polarization direction is the P polarization once, so that the light beam is reflected to the optical modulator 61. The optical modulator 61 is configured to: modulate the light beam based on image information of a vehicle headlight, to generate imaging light f1, where a polarization direction of the imaging light f1 is S polarization; and transmit the imaging light f1 to the lens 64 through the optical splitting component 62 and the conductive component 63. For details, refer to FIG. 14. Details are not described herein again. Reverse light f2 received by the lens 64 is transmitted to the optical absorption component 65 through the conductive component 63 and the optical splitting component 62. For details, refer to FIG. 14. Details are not described herein again.

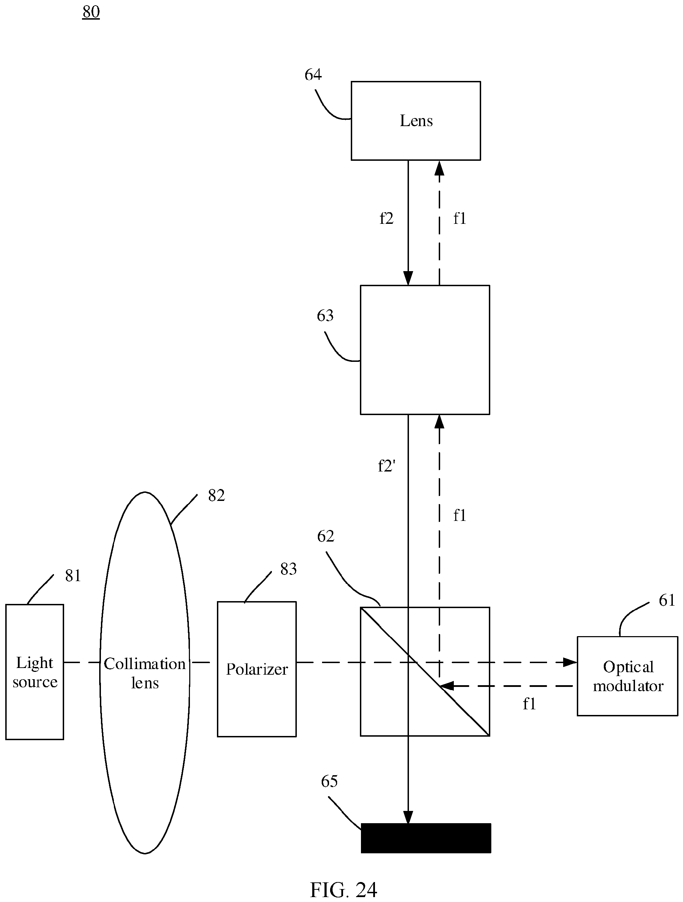

Based on the optical system 80 shown in FIG. 23, the reflector 84 is omitted in the optical system 80 shown in FIG. 24. Specifically, refer to FIG. 18. The light source 81 is configured to generate a light beam and transmit the light beam to the collimation lens 82. The collimation lens 82 is configured to collimate the light beam output by the light source 81, and transmit the collimated light beam to the polarizer 83. The polarizer 83 transmits a light beam whose polarization direction is the P polarization in the collimated light beam to the optical splitting component 62. The optical splitting component 62 is configured to transmit the light beam whose polarization direction is the P polarization to the optical modulator 61.

Specifically, a polarizer may be further disposed on a side that is of the conductive component and that is away from the optical splitting component. The disposed polarizer transmits light whose polarization direction is the second polarization direction (the S polarization), so that the optical system 80 can transmit, to the conductive component 63, the received reverse light whose polarization direction is the S polarization in the reverse light.

For example, in the optical system 80 shown in FIG. 23 and FIG. 24, if the polarization direction of the light beam generated by the light source is the first polarization direction (the P polarization), the polarizer 83 may be omitted.

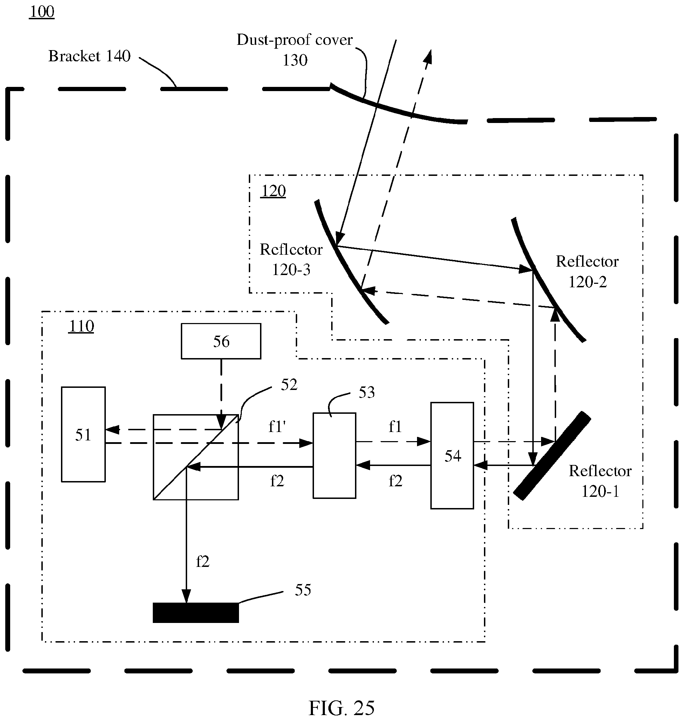

As shown in FIG. 25, an embodiment of this application provides a display device 100. The display device 100 includes an optical system 110 and a reflection component 120. The optical system 110 may be any one of the optical systems 50 shown in FIG. 5, FIG. 7, and FIG. 8, or any one of the optical systems 60 shown in FIG. 12, FIG. 14, and FIG. 15. The reflection component 120 includes a reflector 120-1, a reflector 120-2, and a reflector 120-3. The optical system 110 is configured to: generate imaging light, and output the imaging light. The reflection component 120 is configured to reflect the imaging light output by the optical system 110. It should be noted that the reflection component 120 in FIG. 25 may further include more or fewer reflectors. When the display device 100 is applied to different scenarios, the reflectors may be properly increased or decreased. This is not limited in embodiments of this application.

Specifically, the optical system 110 shown in FIG. 25 is the optical system 50 shown in FIG. 8. When the optical system 110 generates imaging light, the imaging light is reflected by the reflector 120-1 for a first time, then reflected by the reflector 120-2 for a second time, and then reflected by the reflector 120-3 for a third time. Finally, the imaging light is transmitted out. In some other embodiments, the reflection component 120 further includes a diffusion screen 121. The diffusion screen 121 is disposed between the reflector 120-1 and the optical system 110. When the optical system 110 generates imaging light, the imaging light is first transmitted to the diffusion screen 121. The diffusion screen 121 is configured to perform imaging based on the imaging light. Then, the imaging light continues to propagate and is reflected by one or more reflectors in the reflection component.

When the optical system 100 receives reverse light, the reverse light is reflected to the optical system 110 through the reflection component. Specifically, the reverse light is reflected by the reflector 120-3 for a first time, then reflected by the reflector 120-2 for a second time, and then reflected by the reflector 120-1 for a third time. Finally, the reverse light is reflected to the optical system 110.

To ensure that a polarization direction of the reverse light received by the conductive component in the optical system 110 is S polarization, the polarizer is usually disposed on a side that is of the conductive component in the optical system 110 and that is away from the optical splitting component. The polarizer transmits light whose polarization direction is the second polarization direction (the S polarization), so that after the reverse light passes through the polarizer, the reverse light whose polarization direction is the S polarization is transmitted to the conductive component. Alternatively, the polarizer may be disposed in the reflection component. The polarizer may be disposed in front of or behind any reflector along an optical path of the reflection component. The polarizer transmits light whose polarization direction is the second polarization direction (the S polarization), so that after the reverse light passes through the polarizer in the reflection component 120, the reverse light whose polarization direction is the S polarization is transmitted to the optical system 110. This is not limited in embodiments of this application.

As shown in FIG. 25, in some other embodiments, to facilitate packaging of the optical system 110 and the reflection component 120 together, the display device 100 further includes a dust-proof cover 130 and a bracket 140 for supporting the dust-proof cover 130. The bracket 140 and the dust-proof cover 130 form an accommodation cavity. The optical system 110 and the reflection component 120 are disposed in the accommodation cavity. The dust-proof cover 130 transmits light whose polarization direction is the second polarization direction (the S polarization). In this case, no polarizer may be disposed on a side that is of the conductive component and that is away from the optical splitting component in the optical system 110 or in the reflection component 120. The dust-proof cover 130 transmits the imaging light that is reflected by the reflection component 120 and whose polarization direction is the S polarization. The dust-proof cover 130 receives the reverse light, and transmits the reverse light whose polarization direction is the S polarization to the reflection component 120.

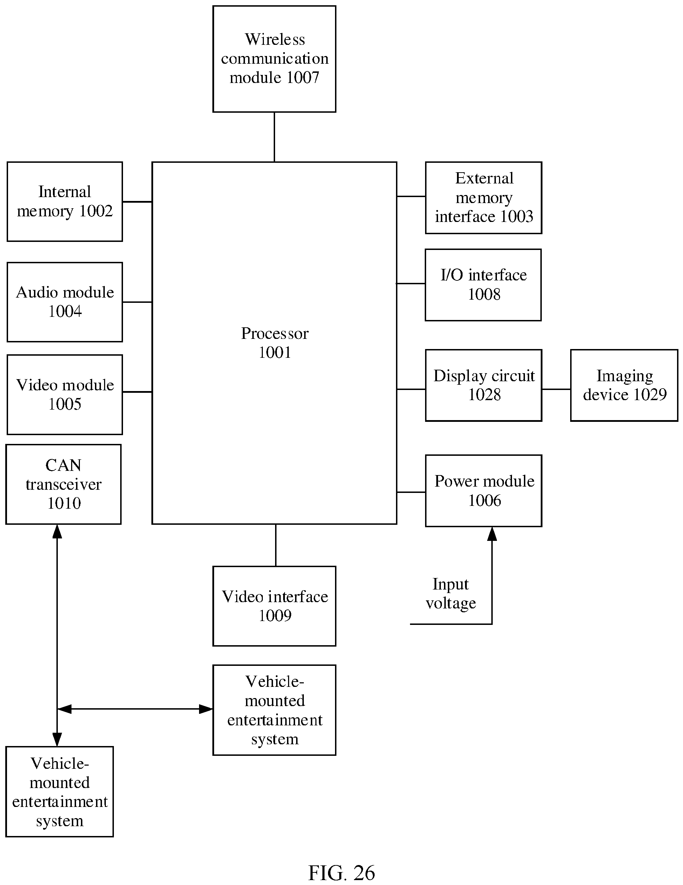

FIG. 26 is a diagram of a circuit of the display device 100 according to an embodiment of this application. As shown in FIG. 26, the circuit in the display apparatus mainly includes a processor 1001, an internal memory 1002, an external memory interface 1003, an audio module 1004, a video module 1005, a power module 1006, a wireless communication module 1007, an I/O interface 1008, a video interface 1009, a controller area network (Controller Area Network, CAN) transceiver 1010, a display circuit 1028, an imaging device 1029, and the like. The processor 1001 may be connected to a peripheral component of the processor 1001 through a bus, for example, the memory 1002, the CAN transceiver 1010, the audio module 1004, the video module 1005, the power module 1006, the wireless communication module 1007, the I/O interface 1008, the video interface 1009, the CAN transceiver 1010, and the display circuit 1028. The processor 1001 may be referred to as a front-end processor.

In addition, the diagram of the circuit in this embodiment of this application does not constitute a specific limitation on the display apparatus. In some other embodiments of this application, the display apparatus may include more or fewer components than components shown in the figure, some components may be combined, some components may be split, or different components may be arranged. The components shown in the figure may be implemented by using hardware, software, or a combination of software and hardware.

The processor 1001 includes one or more processing units. For example, the processor 1001 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-Network Processing Unit, NPU), and/or the like. Different processing units may be independent components, or may be integrated into one or more processors.

A memory may be further disposed in the processor 1001, and is configured to store instructions and data. For example, the memory may be configured to store an operating system and an AR Creator software package of the display apparatus. In some embodiments, the memory in the processor 1001 is a cache memory. The memory may store instructions or data just used or cyclically used by the processor 1001. If the processor 1001 needs to use the instructions or the data again, the processor 1001 may directly invoke the instructions or the data from the memory. This avoids repeated access, reduces waiting time of the processor 1001, and improves system efficiency.

In addition, if the display apparatus in this embodiment is mounted on a means of transportation, functions of the processor 1001 may be implemented by a domain controller on the means of transportation.

In some embodiments, the display apparatus may further include a plurality of input/output (Input/Output, I/O) interfaces 1008 connected to the processor 1001. The interface 1008 may include but is not limited to an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1008 may be connected to a device such as a mouse, a touchscreen, a keyboard, a camera, a speaker/horn, a microphone, or the like, or may be connected to a physical button (for example, a volume button, a brightness adjustment button, a power-on/off button, or the like) on the display apparatus.

The internal memory 1002 may be configured to store computer-executable program code. The executable program code includes instructions. The memory 1002 may include a program storage area and a data storage area. The program storage area may store an operating system, an application required by at least one function (such as a call function, a time setting function, or an AR function), and the like. The data storage area may store data (such as a phone book and world time) created in a process of using the display apparatus, and the like. In addition, the internal memory 1002 may include a high-speed random access memory, or may include a nonvolatile memory, for example, at least one magnetic disk storage device, a flash memory, or a universal flash storage (Universal Flash Storage, UFS). The processor 1001 performs various function applications of the display apparatus and data processing by running the instructions stored in the internal memory 1002 and/or instructions stored in the memory disposed in the processor 1001.

The external memory interface 1003 may be configured to connect to an external memory (for example, a Micro SD card). The external memory may store data or program instructions as required. The processor 1001 may perform an operation such as reading or writing on the data or the program through the external memory interface 1003.

The audio module 1004 is configured to convert digital audio information into an analog audio signal for output, and is also configured to convert analog audio input into a digital audio signal. The audio module 1004 may be further configured to encode and decode an audio signal, for example, perform voice playing or voice recording. In some embodiments, the audio module 1004 may be disposed in the processor 1001, or some function modules in the audio module 1004 are disposed in the processor 1001. The display apparatus may implement an audio function through the audio module 1004, the application processor, and the like.

The video interface 1009 may receive audio and video input from the outside. The video interface 1009 may be specifically a high-definition multimedia interface (High Definition Multimedia Interface, HDMI), a digital visual interface (Digital Visual Interface, DVI), a video graphics array (Video Graphics Array, VGA), a display port (Display port, DP), a low-voltage differential signal (Low Voltage Differential Signaling, LVDS) interface, or the like. The video interface 1009 may further output a video to the outside. For example, the display apparatus receives, through the video interface, video data sent by a navigation system or video data sent by a domain controller.

The video module 1005 may decode a video input by the video interface 1009, for example, perform H.264 decoding. The video module may further encode a video collected by the display apparatus, for example, perform H.264 encoding on a video collected by an external camera. In addition, the processor 1001 may also decode the video input by the video interface 1009, and then output a decoded image signal to the display circuit.

Further, the display apparatus further includes the CAN transceiver 1010. The CAN transceiver 1010 may be connected to a CAN bus (CAN BUS) of a vehicle. Through the CAN bus, the display apparatus can communicate with a vehicle-mounted entertainment system (music, radio, and video modules), a vehicle status system, and the like. For example, a user may enable a vehicle-mounted music playing function by operating the display apparatus. The vehicle status system may send vehicle status information (vehicle door, seat belt, and the like) to the display apparatus for display.

The display circuit 1028 and the imaging device 1029 jointly implement a function of displaying an image. The display circuit 1028 receives the image information output by the processor 1001, processes the image information, and then inputs the processed image information to the imaging device 1029 for imaging. The display circuit 1028 may further control an image displayed by the imaging device 1029, for example, control a parameter such as display brightness or contrast. The display circuit 1028 may include a drive circuit, an image control circuit, and the like.

The imaging device 1029 is configured to modulate, based on the input image information, a light beam input by the light source, to generate a visual image. The imaging device 1029 may be a liquid crystal on silicon panel, a liquid crystal display panel, or a digital micromirror device.

In this embodiment, the video interface 1009 may receive the input video data (or referred to as a video source). The video module 1005 performs decoding and/or digitization processing and outputs the image signal to the display circuit 1028. The display circuit 1028 drives, based on the input image signal, the imaging device 1011 to image a light beam emitted by the light source, to generate the visual image (emit the imaging light).

The power module 1006 is configured to supply power to the processor 1001 and the light source based on input electricity (for example, a direct current). The power module 1006 may include a rechargeable battery, and the rechargeable battery may supply power to the processor 1001 and the light source. Light emitted by the light source may be transmitted to the imaging device 1029 for imaging, to form an image optical signal (imaging light).

In addition, the power module 1006 may be connected to a power supply module (for example, a power battery) of the vehicle, and the power supply module of the vehicle supplies power to the power module 1006 of the display apparatus.

The wireless communication module 1007 may enable the display apparatus to perform wireless communication with the outside, and may provide wireless communication solutions such as a wireless local area network (Wireless Local Area Network, WLAN) (such as a Wireless Fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, and an infrared (Infrared, IR) technology. The wireless communication module 1007 may be one or more components integrating at least one communication processing module. The wireless communication module 1007 receives an electromagnetic wave through an antenna, performs frequency modulation and filtering processing on an electromagnetic wave signal, and sends a processed signal to the processor 1001. The wireless communication module 1007 may further receive a to-be-sent signal from the processor 1001, perform frequency modulation and amplification on the signal, and convert the signal into an electromagnetic wave for radiation through the antenna.

In addition, in addition to inputting the video data decoded by the video module 1005 through the video interface 1009, the video data decoded by the video module 1005 may alternatively be received in a wireless manner through the wireless communication module 1007 or read from the internal memory 1002 or the external memory. For example, the display apparatus may receive the video data from the terminal device or the vehicle-mounted entertainment system through the wireless local area network in the vehicle, and the display apparatus may further read the audio and video data stored in the internal memory 1002 or the external memory.

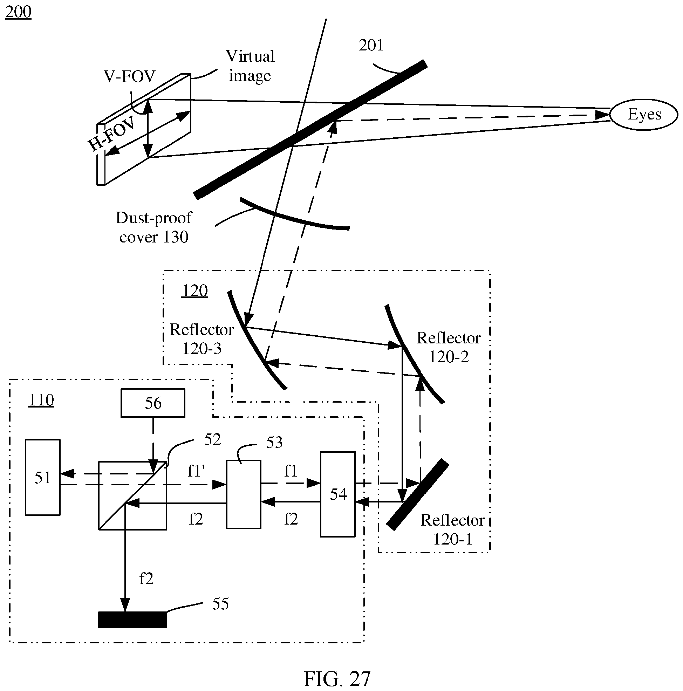

As shown in FIG. 27, when the display device 100 is installed on the means of transportation 200, the means of transportation 200 further includes a windshield 201. The windshield 201 is configured to receive the imaging light reflected by the display device 100. The imaging light includes driving-related image information. The windshield 201 reflects the imaging light to eyes of a driver of the means of transportation, so that the driver of the means of transportation 200 sees a virtual image of the driving-related image information. When the means of transportation travels outdoors, the windshield 201 of the means of transportation is further configured to receive external light. The external light may be sunlight or the like. The windshield 201 transmits the external light to generate reverse light. The windshield 201 transmits the reverse light to the display device 100.

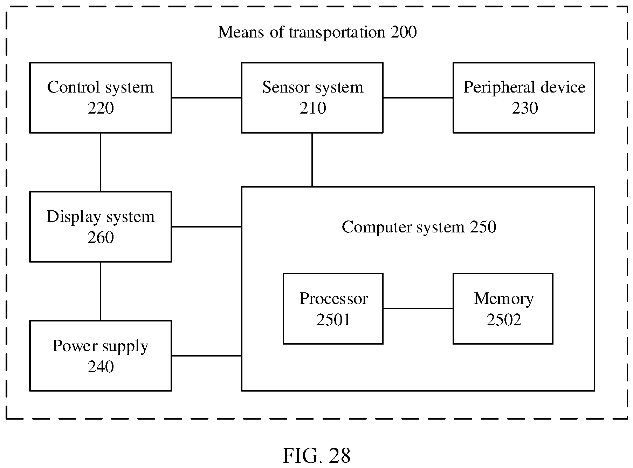

FIG. 28 is a functional diagram of a means of transportation 200 according to an embodiment of this application. The means of transportation may include various subsystems, for example, a sensor system 210, a control system 220, one or more peripheral devices 230 (one peripheral device is used as an example in the figure), a power supply 240, a computer system 250, and a display system 260 in the figure. The subsystems may communicate with each other. The display system 220 may include the display device provided in embodiments of this application. The means of transportation may further include another function system, for example, an engine system or a cockpit that provides power for the means of transportation. This is not limited herein in this application.

Specifically, the sensor system 210 may include a plurality of detection apparatuses. The detection apparatuses can sense measured information, and convert the sensed information into an electrical signal or other information in a required form based on a specific rule for output. As shown in FIG. 22, the detection apparatuses may include a global positioning system (Global Positioning System, GPS), a vehicle speed sensor, an inertial measurement unit (Inertial Measurement Unit, IMU), a radar unit, a laser rangefinder, a camera apparatus, a wheel speed sensor, a steering sensor, a gear sensor, another element used for automatic detection, or the like, and this is not limited in this application.

The control system 220 may include a plurality of elements, for example, a steering unit, a brake unit, a lighting system, a self-driving system, a map navigation system, a network time system, and an obstacle avoidance system shown in the figure. The control system 220 may receive information (for example, a vehicle speed and an inter-vehicle distance) sent by the sensor system 210, to implement functions such as self-driving and map navigation.

Optionally, the control system 220 may further include elements such as a throttle controller and an engine controller that are configured to control the driving speed of the vehicle. This is not limited in this application.

The peripheral device 230 may include a plurality of elements, for example, a communication system, a touchscreen, a user interface, a microphone, and a speaker. The communication system is configured to implement network communication between the means of transportation and another device other than the means of transportation. In actual application, the communication system may implement network communication between the means of transportation and the another device by using a wireless communication technology or a wired communication technology. The wired communication technology may refer to performing communication between the vehicle and the another device by using a network cable, an optical fiber, or the like.

The power supply 240 represents a system used to provide power or energy for the vehicle, and may include but is not limited to a rechargeable lithium battery and a lead-acid battery. In actual application, one or more battery modules in the power supply are configured to provide electrical energy or energy for starting the vehicle. A type and a material of the power supply are not limited in this application.

Several functions of the means of transportation may be controlled and implemented by the computer system 250. The computer system 250 may include one or more processors 2501 (one processor is shown as an example in the figure) and a memory 2502 (which may also be referred to as a storage apparatus). In actual application, the memory 2502 is inside the computer system 250, or may be outside the computer system 250, for example, may be used as a cache in the means of transportation. This is not limited in this application.

Specifically, the processor 2501 may include one or more general-purpose processors, for example, a graphics processing unit (graphics processing unit, GPU). The processor 2501 may be configured to run a related program stored in the memory 2502 or instructions corresponding to a program, to implement a corresponding function of the vehicle. The processor 2501 may alternatively be referred to as a domain controller.

The memory 2502 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2502 may alternatively include a combination of the foregoing types of memories. The memory 2502 may be configured to store a set of program code or instructions corresponding to program code, so that the processor 2501 invokes the program code or the instructions stored in the memory 2502 to implement a corresponding function of the vehicle. In this application, the memory 2502 may store a set of program code used to control the vehicle. The processor 2501 may control safe driving of the vehicle by invoking the program code. A manner of implementing safe driving of the vehicle is specifically described in detail below in this application.

Optionally, in addition to storing the program code or instructions, the memory 2502 may further store information such as a road map, a driving route, and sensor data. The computer system 250 may implement a vehicle-related function in combination with other elements in the diagram of the functional framework of the vehicle, such as the sensor and the GPS in the sensor system. For example, the computer system 250 may control the driving direction or the driving speed of the means of transportation based on data input of the sensor system 210. This is not limited in this application.

The display system 260 may interact with another system in the means of transportation. For example, the display system 260 may display navigation information sent by the control system 220, or play multimedia content sent by the computer system 250 and the peripheral device 230. For a specific structure of the display system 260, refer to the foregoing embodiment of the display apparatus. Details are not described herein again.

The four subsystems shown in this embodiment, namely, the sensor system 210, the control system 220, the computer system 250, and the display system 260 are merely examples, and do not constitute a limitation. In actual application, the means of transportation may combine several elements in the vehicle based on different functions, to obtain subsystems with corresponding different functions. In actual application, the means of transportation may include more or fewer systems or elements. This is not limited in this application.

The means of transportation in embodiments of this application may be a known means of transportation such as a vehicle, an airplane, a ship, or a rocket, or may be a means of transportation newly emerging in the future. The vehicle may be an electric vehicle, a fuel vehicle, or a hybrid vehicle, for example, a pure electric vehicle, an enhanced electric vehicle, a hybrid electric vehicle, a fuel cell vehicle, or a new energy vehicle. This is not specifically limited in this application.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. An optical system, comprising: an optical modulator and a lens; and
an optical splitting component disposed between the optical modulator and the lens, and a conductive component disposed between the optical splitting component and the lens, wherein
the optical modulator is configured to: generate imaging light, and transmit the imaging light to the optical splitting component, wherein a polarization direction of the imaging light is a first polarization direction;
the optical splitting component is configured to transmit the imaging light to the conductive component;
the conductive component is configured to: adjust the polarization direction of the imaging light to a second polarization direction, and transmit the imaging light to the lens, wherein the first polarization direction is different from the second polarization direction;
the lens is configured to output the imaging light;
the lens is further configured to: receive reverse light, and transmit the reverse light to the conductive component, wherein a polarization direction of the reverse light is the second polarization direction;
the conductive component is further configured to transmit the reverse light to the optical splitting component; and
the optical splitting component is further configured to reflect the reverse light.

2. The optical system according to claim 1, wherein the conductive component comprises a magneto-optical crystal disposed close to the optical splitting component and a 1/2 wave plate disposed close to the lens, wherein
the magneto-optical crystal is configured to rotate the polarization direction of the imaging light clockwise by 45 degrees, and the 1/2 wave plate is configured to rotate the polarization direction of the imaging light clockwise by 45 degrees; and
the 1/2 wave plate is further configured to rotate the polarization direction of the reverse light counterclockwise by 45 degrees, and the magneto-optical crystal is further configured to rotate the polarization direction of the reverse light clockwise by 45 degrees.

3. The optical system according to claim 1 or 2, wherein the optical system further comprises an optical absorption component, wherein
the optical absorption component is configured to absorb the reverse light reflected by the optical splitting component.

4. The optical system according to claim 3, wherein the optical system further comprises a light source, wherein
the light source is disposed on a side that is of the optical splitting component and that is opposite to the optical absorption component;
the light source is configured to generate a light beam, wherein a polarization direction of the light beam is the second polarization direction;
the optical splitting component is configured to reflect, to the optical modulator, the light beam output by the light source; and
the optical modulator is specifically configured to modulate, based on image information, the light beam output by the light source, to generate the imaging light comprising the image information.

5. The optical system according to claim 4, wherein the optical splitting component comprises:
a first polarization optical splitting prism, wherein the first polarization optical splitting prism comprises a first incident surface, a second incident surface, a first emergent surface, and a second emergent surface, the first incident surface is opposite to the first emergent surface, and the second incident surface is opposite to the second emergent surface, wherein
the optical modulator is disposed on a side of the first incident surface of the first polarization optical splitting prism, the conductive component is disposed on a side of the first emergent surface of the first polarization optical splitting prism, the light source is disposed on a side of the second incident surface of the first polarization optical splitting prism, and the optical absorption component is disposed on a side of the second emergent surface of the first polarization optical splitting prism.

6. The optical system according to claim 4, wherein the optical splitting component comprises a second polarization optical splitting prism and a third polarization optical splitting prism, wherein the second polarization optical splitting prism comprises a third incident surface, a fourth incident surface, and a third emergent surface, the third incident surface is opposite to the third emergent surface, the third polarization optical splitting prism comprises a fifth incident surface, a fourth emergent surface, and a fifth emergent surface, and the fifth incident surface is opposite to the fifth emergent surface; and
the fifth incident surface of the third polarization optical splitting prism is disposed on a side of the third emergent surface of the second polarization optical splitting prism, the optical modulator is disposed on a side of the third incident surface of the second polarization optical splitting prism, the light source is disposed on a side of the fourth incident surface of the second polarization optical splitting prism, the conductive component is disposed on a side of the fifth emergent surface of the third polarization optical splitting prism, and the optical absorption component is disposed on a side of the fourth emergent surface of the third polarization optical splitting prism.

7. An optical system, comprising: an optical modulator and a lens; and
an optical splitting component disposed between the optical modulator and the lens, and a conductive component disposed between the optical splitting component and the lens, wherein
the optical modulator is configured to: generate imaging light, and transmit the imaging light to the optical splitting component, wherein a polarization direction of the imaging light is a second polarization direction;
the optical splitting component is configured to reflect the imaging light to the conductive component;
the conductive component is configured to transmit the imaging light to the lens;
the lens is configured to output the imaging light;
the lens is further configured to: receive reverse light, and transmit the reverse light to the conductive component, wherein a polarization direction of the reverse light is the second polarization direction;
the conductive component is further configured to: adjust the polarization direction of the reverse light to a first polarization direction, and transmit the reverse light to the optical splitting component, wherein the first polarization direction is different from the second polarization direction; and
the optical splitting component is further configured to transmit the reverse light.

8. The optical system according to claim 7, wherein the conductive component comprises a 1/2 wave plate disposed close to the optical splitting component and a magneto-optical crystal disposed close to the lens, wherein
the 1/2 wave plate is configured to rotate the polarization direction of the imaging light counterclockwise by 45 degrees;
the magneto-optical crystal is configured to rotate the polarization direction of the imaging light clockwise by 45 degrees;
the magneto-optical crystal is further configured to rotate the polarization direction of the reverse light clockwise by 45 degrees; and
the 1/2 wave plate is further configured to rotate the polarization direction of the reverse light clockwise by 45 degrees.

9. The optical system according to claim 7 or 8, wherein the optical system further comprises an optical absorption component, wherein
the optical absorption component is configured to absorb the reverse light transmitted through the optical splitting component.

10. The optical system according to any one of claims 7 to 9, wherein the optical system further comprises a light source, wherein the light source is disposed on a side that is of the optical splitting component and that is opposite to the optical modulator;
the light source is configured to generate a light beam, wherein a polarization direction of the light beam is the first polarization direction;
the optical splitting component is configured to transmit, to the optical modulator, the light beam output by the light source; and
the optical modulator is specifically configured to modulate, based on image information, the light beam output by the light source, to generate the imaging light comprising the image information.

11. The optical system according to claim 10, wherein the optical splitting component comprises a first polarization optical splitting prism, wherein the first polarization optical splitting prism comprises a first incident surface, a second incident surface, a first emergent surface, and a second emergent surface, the first incident surface is opposite to the first emergent surface, and the second incident surface is opposite to the second emergent surface, wherein
the conductive component is disposed on a side of the first incident surface of the first polarization optical splitting prism, the light source is disposed on a side of the second incident surface of the first polarization optical splitting prism, the optical absorption component is disposed on a side of the first emergent surface of the first polarization optical splitting prism, and the optical modulator is disposed on a side of the second emergent surface of the first polarization optical splitting prism.

12. The optical system according to claim 10, wherein the optical splitting component comprises a second polarization optical splitting prism and a third polarization optical splitting prism, wherein the second polarization optical splitting prism comprises a third incident surface, a third emergent surface, and a fourth emergent surface, and the third incident surface is opposite to the third emergent surface; and the third polarization optical splitting prism comprises a fourth incident surface, a fifth incident surface, and a fifth emergent surface, and the fifth incident surface is opposite to the fifth emergent surface; and
the fourth incident surface of the third polarization optical splitting prism is disposed on a side of the fourth emergent surface of the second polarization optical splitting prism, the light source is disposed on a side of the third incident surface of the second polarization optical splitting prism, the optical modulator is disposed on a side of the third emergent surface of the second polarization optical splitting prism, the conductive component is disposed on a side of the fifth incident surface of the third polarization optical splitting prism, and the optical absorption component is disposed on a side of the fifth emergent surface of the third polarization optical splitting prism.

13. The optical system according to claim 4 or 10, further comprising a controller, wherein the controller is connected to the light source and the optical absorption component; and
the controller is configured to adjust, based on light intensity of the reverse light absorbed by the optical absorption component, light intensity of the light beam generated by the light source.

14. The optical system according to any one of claims 1 to 13, further comprising a polarizer, wherein the polarizer is disposed on a side that is of the conductive component and that is away from the optical splitting component;
the polarizer is configured to transmit the imaging light whose polarization direction is the second polarization direction; and
the polarizer is further configured to transmit the reverse light whose polarization direction is the second polarization direction.

15. The optical system according to any one of claims 1 to 14, wherein the optical absorption component comprises any one of the following: a black velvet cloth, a metal sheet plated with black paint, and a photodiode.

16. The optical system according to any one of claims 1 to 15, wherein the first polarization direction is P polarization, and the second polarization direction is S polarization.

17. The optical system according to any one of claims 1 to 16, wherein the optical modulator comprises any one of the following: a thin film transistor liquid crystal display, digital light processing, and a liquid crystal on silicon.

18. A display device, comprising a processor and the optical system according to any one of claims 1 to 17, wherein the processor is configured to send image information to an optical modulator in the optical system.

19. The display device according to claim 18, further comprising a reflection component, wherein
the reflection component is configured to: reflect imaging light output by the optical system, and reflect reverse light to the optical system.

20. The display device according to claim 19, further comprising a dust-proof cover and a bracket supporting the dust-proof cover, wherein the bracket and the dust-proof cover form an accommodation cavity, and the optical system and the reflection component are disposed in the accommodation cavity;
the dust-proof cover is configured to transmit the imaging light reflected by the reflection component; and
the dust-proof cover is further configured to: receive the reverse light, and transmit the reverse light whose polarization direction is a second polarization direction to the reflection component.

21. A means of transportation, comprising the display device according to any one of claims 18 to 20, wherein the display device is mounted on the means of transportation.

22. The means of transportation according to claim 21, further comprising a windshield, wherein
the windshield is configured to: receive imaging light reflected by the display device, and reflect the imaging light to eyes of a driver of the means of transportation; and
the windshield is further configured to transmit external light, to generate the reverse light.
